Europäisches Patentamt

European Patent Office

Office européen des brevets

(19)

(11) **EP 0 833 799 B1**

(12) **EUROPEAN PATENT SPECIFICATION**

(45) Date of publication and mention
of the grant of the patent:
**05.12.2001 Bulletin 2001/49**

(51) Int Cl.[7]: **C01D 7/18**, C01D 7/02,
C01C 1/244, C01F 11/46

(21) Application number: **96918561.0**

(22) Date of filing: **21.06.1996**

(86) International application number:
**PCT/CA96/00420**

(87) International publication number:
**WO 97/00829 (09.01.1997 Gazette 1997/03)**

(54) **METHOD FOR PRODUCTION OF SODIUM BICARBONATE, SODIUM CARBONATE AND AMMONIUM SULFATE FROM SODIUM SULFATE**

VERFAHREN ZUR HERSTELLUNG VON NATRIUMBICARBONAT, NATRIUMCABONAT UND AMMONIUMSULFAT AUS NATRIUMSULFAT

PROCEDE POUR LA PRODUCTION DE BICARBONATE DE SODIUM, DE CARBONATE DE SODIUM ET DE SULFATE D'AMMONIUM A PARTIR DE SULFATE DE SODIUM

(84) Designated Contracting States:
**AT BE CH DE DK ES FI FR GB GR IE IT LI LU MC NL PT SE**
Designated Extension States:
**LT LV SI**

(30) Priority: **23.06.1995 US 494073**
**25.10.1995 US 547773**

(43) Date of publication of application:
**08.04.1998 Bulletin 1998/15**

(73) Proprietor: **AIRBORNE INDUSTRIAL MINERALS INC.**
**Calgary, Alberta (CA)**

(72) Inventors:
• **KRESNYAK, Steve**
**Ormiston Mining & Smelting Co.**
**Calgary, Alberta T2W 4X9 (CA)**

• **HALLDORSON, Jake**
**Ormiston Mining & Smelting Co.**
**Calgary, Alberta T2W 4X9 (CA)**
• **HANTKE, Mark**
**Ormiston Mining & Smelting Co. Ltd.**
**Calgary, Alberta T2W 4X9 (CA)**

(74) Representative: **Johansson, Lars E.**
**Lars Johansson Patentbyra AB**
**P.O. Box 68**
**801 02 Gävle (SE)**

(56) References cited:
**BE-A- 534 078**       **CA-A- 2 032 627**
**DE-B- 1 002 745**    **DE-C- 889 290**
**GB-A- 1 123 528**    **US-A- 4 917 874**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

<u>Technical Field</u>

This invention relates to a process for generating sodium carbonate compounds and ammonium sulfate in a commercially viable and substantially pure form.

<u>Background Art</u>

Several processes have been developed to manufacture alkaloid carbonate and various sulfate components. These methods have difficulty in producing components which are in pure or near pure state for commercial use.

Stiers, in U.S. Patent No. 3,493,329, issued February 3, 1970, teaches a method of making sodium carbonate. The Stiers method is a co-precipitation method and cannot provide for selective precipitation of desired products since the salts are reciprocal salts and form a double salt. In the Stiers method, the desire is to remove the sulfate anion to use it for the transportation of sodium cations from sodium chloride to the bicarbonating process as sodium sulfate. In addition to the above, the Stiers process involves the continuous recycling of the mother liquor which requires that the ammonium sulfate in the liquor be continuously removed or reduced from the process stream. If the ammonium sulfate reaches a saturation point in the bicarbonating stage, ammonium sulfate will coprecipitate with the sodium sulfate in the form of a double salt compound or two inseparable salts.

Stiers demonstrates a process to generate two salts and double salts rather than a pure single salt, the latter being much more desirable from a commercial point of view.

The present invention is directed to circumventing the previously encountered difficulties of reciprocating salt pairs.

More recent attempts have been made to develop methods for producing sodium bicarbonate and ammonium sulfate from sodium sulfate in substantially pure quality such that these products can be used as commercial grade baking soda, and fertilizer.

Canadian Application Serial Number 2,032,627 offers an innovative technique to produce the desirable pure products. This method employed a number of evaporative and cooling techniques to alter the solubility of sodium sulfate and ammonium sulfate in solution and selectively precipitate the desired pure components. Lab bench scale batch testing of this method demonstrated effective results, however, continuous pilot scale testing clearly identified undesirable limitations to the process as specified. More specifically, the process is difficult to operate in a consistent and continuous mode and as such is highly susceptible to ammonia sulfate contamination with sodium sulfate, resulting in a commercially undesirable double salt product.

In greater detail of the teachings of the Canadian application, it is taught that brine remaining after screening sodium sulfate has a temperature of 95°C and is saturated with both sodium and ammonium sulfate and that by cooling the mixture of both brines in a crystallizer from 95°C to 60°C, the solubility of ammonium sulfate is decreased while the solubility of sodium sulfate increases. The result is that more ammonium sulfate precipitates while keeping sodium sulfate in solution.

By following the teachings, the mixed solution is supersaturated with sodium sulfate due to evaporations at 95°C and specifically results in the production of double salt when the ammonium sulfate crystallization step of 60°C is attempted as a continuous process.

<u>Industrial Applicability</u>

The processes of the present invention have applicability in the fertilizer, refinery, environmental and chemical engineering industries.

<u>Disclosure of the Invention</u>

One object of the present invention is to provide a method of selectively precipitating sodium bicarbonate and ammonium sulfate from a source containing sodium sulfate. The features of this method are defined in independent claim 1. Preferred embodiments of this method are furthermore defined in dependent claims 2 to 12.

A further object of the present invention is to provide a continuous process for producing sodium bicarbonate, sodium carbonate, and ammonium sulfate.

The features of this process are defined in independent claim 13. Preferred embodiments of the method are furthermore defined in dependent claims 14 to 20.

By controlling temperatures and pressures, once a bicarbonate precipitate is formed, the filtrate may be subjected to a purification step wherein the remaining sodium ions are substantially removed or made to be held in solution prior to the precipitation of ammonium sulfate. This results in a cleaner precipitate of ammonium sulfate and therefore results in a more commercially desirable product, which product exceeds purity measures not previously encountered with the prior art processes. In a purification possibility, the filtrate may be supersaturated with ammonia in a conditioning reactor which operates at a substantially cooler temperature, for example, 7°C. This is one example of an appropriate temperature, a suitable range is between about 20°C to about -40°C. This procedure results in the formation of a mixed salt of ammonium sulfate and sodium sulfate, both of which are insoluble at this temperature and this excess of ammonia. Once precipitated, the filtrate, therefore having a lower concentration of sodium cations inherently leads to a less contaminated precipitated ammonium sulfate.

Several different processes are possible which include sodium ion reduction by ion exchange, refrigeration and evaporation among others. These will be discussed hereinafter. The processes disclosed also relate to adaptation of the processes to flue gas desulfurization and gypsum production. The processes disclosed herein result in the production of ammonium sulfate in a purity previously unobtainable by prior art methods.

Desirable results have been obtained when the conditioning step increases the ammonium concentration from about 10% to about 50%. The mixed salt precipitate, double salt or pure sodium sulfate may be recycled back into the original feed stream with the source of sodium sulfate.

It has been found that by making use of the basic bicarbonate recovery process, that the process can be augmented for additional fields of utility, for example, tail gas desulfurization. This has been broadly indicated hereinabove with respect to the desulfurization of the acid gas stream.

Flue gas desulfurization hereinafter FGD, an example of which employs dry sorbent is generally known in the art. This employs the use of sodium bicarbonate typically for 10% to 90% sulfur component reduction. The bicarbonate is initially calcined by the flue gas heat, which is typically in the range of 350 F to 750 F, to sodium carbonate. This then reacts to form sodium sulfate. Because the sorbent is dry, finely ground powder, there is no negligible cooling effect with the flue gas and as such, the stack temperature can be maintained for emission dispersion. Also, the sodium sulfate may be recovered in a baghouse or an electrostatic precipitator with or without the flyash. The sorbent must be processed to a fine particle size, typically 15 μm and then must be stored under dry conditions to prevent holdup and enhance manageability of the dried sorbent in silos and other equipment.

A further embodiment of the present invention is directed to a process which can utilize a wet scrubbing system and eliminate the corrosion problems, landfill problems and other handling difficulties associated with lime.

The method may employ either bicarbonate or carbonate or a mix thereof. As a further advantage, the process according to the present invention eliminates the drying and sizing step previously encountered in prior art methods.

Furtherstill, utility has been found in application of the overall procedure in making gypsum, for example, of a commercial or landfill grade. By adding lime into the saturated solution of ammonium sulfate, gypsum can be removed as a precipitate.

By practicing the above method, it has been found that selective precipitation of the single salts at high level of commercial purity is achievable on a continuous basis.

The process is further enhanced by providing an ammonia and carbon dioxide chemical recovery scheme for minimizing the chemical consumption to enhance commercial viability. It has been further found that by making use of the basic bicarbonate recovery process, that the process can be used for additional fields of utility, for example tail gas desulfurization, flue gas desulfurization by wet or dry sorbent injection techniques and further application for making commercial or landfill grade gypsum and fully recovering the ammonia chemical.

Brief Description of the Drawings

Figure 1 is a graphical representation of the solubility of sodium bicarbonate, ammonium sulfate and sodium sulfate expressed as pure components in solution at various temperatures;

Figure 2 is a flow chart illustrating the preparation of saturated sodium sulfate brine from the natural sodium sulfate source known as Glaubers salt and from a by-product sodium sulfate source;

Figure 3 is a flow chart illustrating the sodium bicarbonate production unit and gas recovery scheme;

Figure 4 is a flow sheet illustrating the separation scheme for production of ammonium sulfate fertilizer in both the liquid and solid crystal form;

Figure 5 is an alternate embodiment illustrating how the process can be adapted to Tail Gas Desulfurization scheme;

Figure 6 is a further alternate embodiment of the process set forth in Figure 5;

Figure 7 is a flow sheet that illustrates how the process can be adapted to regenerate sodium bicarbonate from captured sodium sulfate in a FGD scheme using a Dry Sorbent Injection (DSI) technique;

Figure 8 is an alternate embodiment illustrating how the process can be adapted for use in a Wet Scrubbing Flue Gas Desulfurization scheme to regenerate the sodium bicarbonate from the captured sodium sulfate solution;

Figure 9 is a further embodiment by which the process can be adapted to produce gypsum and fully recover the ammonia chemical;

Figure 10 is a flow chart illustrating one possible process route for effecting the method according to the present invention;

Figure 11 is an alternate embodiment of Figure 2;

Figure 12 is an alternate embodiment of Figure 2;

Figure 13 is a further alternate embodiment of the process as set forth in Figure 2;

Figure 14 is a still further alternate embodiment of the process of Figure 2 illustrating a tail gas treatment;

Figure 15 is a further alternate embodiment of the process as set forth in Figure 6 illustrating an acid gas treatment;

Figure 16 is a further alternate embodiment of the process where gypsum is produced;

Figure 17 is yet another embodiment of the process according to the present invention illustrating a scrubbing process;

Figure 18 is a schematic illustration of the overall process using an ion exchange unit operation;

Figure 19 is a schematic illustration of the overall process using an ion exchange unit operation and a feed conditioning operation;

Figure 20 is an alternate of the schematic illustration shown in Figure 19; and

Figure 21 is a schematic illustration of the overall process in which a refrigeration unit operation is provided.

Similar numerals in the drawings denote similar elements.

Modes for Carrying Out the Invention

The chemistry involved according to the present invention can be resolved into the following equations:

$$CO_2 + H_2O \rightleftarrows H^+ + HCO_3^-$$

$$NH_3 + H_2O \rightleftarrows NH_4^+ + OH^-$$

$$Na_2SO_4 + 2NH_3 + 2H_2O + 2CO_2 \rightleftarrows 2NaHCO_3 + (NH_4)_2SO_4$$

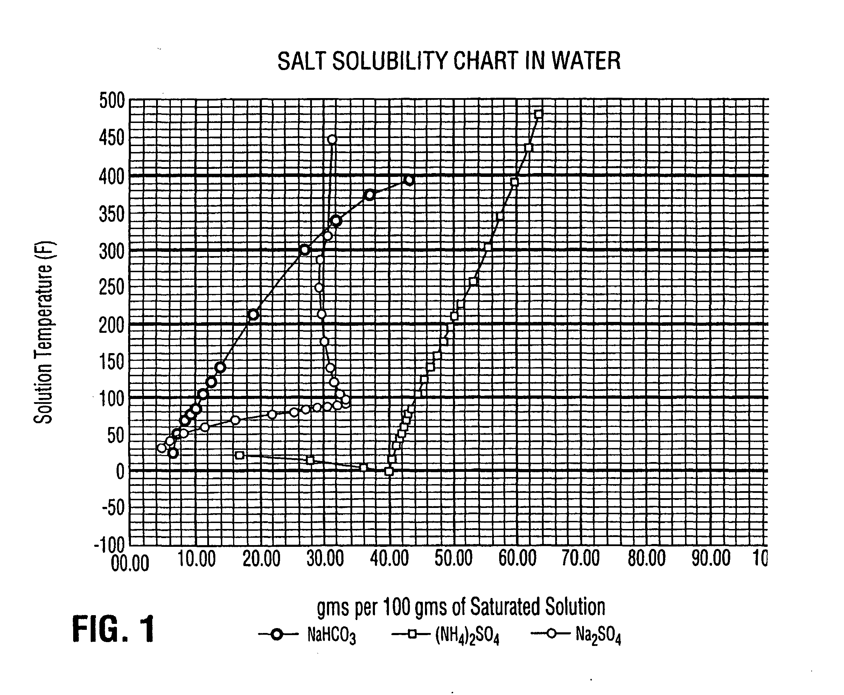

Referring now to Figure 1, shown is a graphical representation of the solubility curves for pure components including sodium bicarbonate, ammonium sulfate and sodium sulfate. The data are expressed as a function of solution temperature. As is evident from the drawing, the solubility of the bicarbonate and the sodium sulfate have an overlapping area in which there will be a precipitation of both of these compounds. As indicated herein previously, the zones where solubility values are in conflict and the interaction effects of the mixed solution solubilities have posed a significant amount of difficulty in the prior art when one was attempting to obtain a substantially pure precipitate of sodium bicarbonate and ammonium sulfate without the formation of a sodium sulfate precipitate, double salts, hydrated salts or any mixed combination.

It has been found that if one simply obeys the solubility data, sodium bicarbonate and ammonium sulfate can be precipitated from a solution containing the molecular species indicated hereinabove without contamination of one precipitate with the other and further without the simultaneous precipitation of the sodium sulfate and double salts as a contaminant.

If the sodium bicarbonate solution is maintained at a temperature sufficient to prevent sodium sulfate precipitation. In view of the data in Figure 1, sodium bicarbonate can be precipitated while the unreacted sodium sulfate remains in solution. If the temperature drops prior to the precipitation of the sodium bicarbonate, a precipitate of sodium sulfate solvate or decahydrate will plate out of solution offering tremendous operating difficulties.

In a chemical system as set forth with respect to the above equations, the system is generally a complex quaternary system, having a reciprocal salt pair relationship as follows:

$$2(NH_4)HCO_3 + Na_2SO_4 \rightleftarrows 2NaHCO_3 + (NH_4)_2SO_4$$

In aqueous solutions above approximately 30°C ammonium bicarbonate is unstable and dissociates in solution as ions. This reduces the system to a complex tertiary system with complications related to hydrate and double salt formation.

The first step in the process is to complete the reaction to drive the equilibrium in the final equation such that the substantially pure sodium bicarbonate crystals are formed. As is well known in the art, numerous possible methods can be practiced for contacting the ammonia and the carbon dioxide with the sodium sulfate solution. As an example, the ammonia may be introduced into a solution of the sodium sulfate and carbon dioxide dispersed through the solution or the carbon dioxide dispersed through the saturated sodium sulfate solution and the ammonia subsequently added or both components may be dispersed through the solution simultaneously. Another possible alternative includes the use of ammonium carbonate or ammonium carbonate compound.

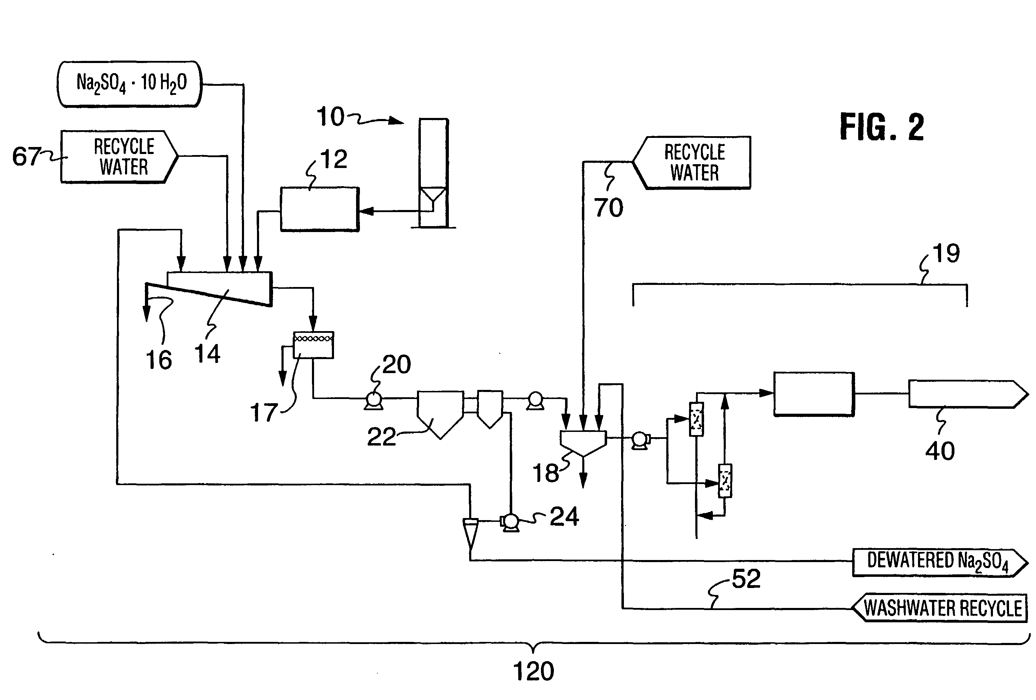

Referring now to Figure 2, shown is one possible process route according to the present invention. A natural source of sodium sulfate can be found in vast reserves of Glaubers salt (sodium sulfate decahydrate). Figure 2 schematically illustrates a mechanism of concentrating and conditioning the sodium sulfate feed brine from Glaubers salt feed stock. The process is globally referenced by numeral 120.

In greater detail, Figure 2 shows the basic scheme by which sodium sulfate by-product can be introduced to the process. As an example, flyash, from commercial steam boilers containing various levels of sodium sulfate may be collected from hot flue gas streams and transferred into a collection silo 10. From silo 10, the flyash can be separated by commercially known dry or wet methods, globally indicated by 12, whereby the material may be transferred into an atmospheric mixing container 14, which container 14 is maintained at a temperature from between about $32°C$ and $42°C$. Coarse insolubles, e.g. rocks, sand clay fines, are separated at 16 and 17. Finer material is flocculated and separated from the sodium sulfate solution once passed through a clarifier 18. The final brine or filtrate, represented by numeral 40, is then further clarified and further filtered by filters 19, if necessary, to polish the solution free of ultra-fine insolubles and potential heavy metals. Insolubles are removed and disposed of by suitable means. Heat energy is typically applied to the melting tank 22. Evaporation may also be required in tank 22 to achieve a sodium sulfate concentration at the desired maximum solution solubility. Circulating pump 24 is required to prevent the formation of encrustations in the sulfate brine preparation unit by reducing the temperature increase of the circulating melt solution.

One of the main difficulties previously encountered in the prior art, was that the temperature of the sodium bicarbonate formation reaction was not maintained within the above-mentioned parameters. The result of this is the formation of a solvate or hydrate commonly referred to as Glaubers salt ($Na_2SO_4 \cdot 10H_2O$) and the formation of ammonium bicarbonate. By maintaining the temperature within the above-stated range, these compounds do not form and therefore do not affect the sodium bicarbonate formation process. In addition, at this temperature, a maximum amount of salt can be put in solution which reduces the feed circulation rate required of brine 40.

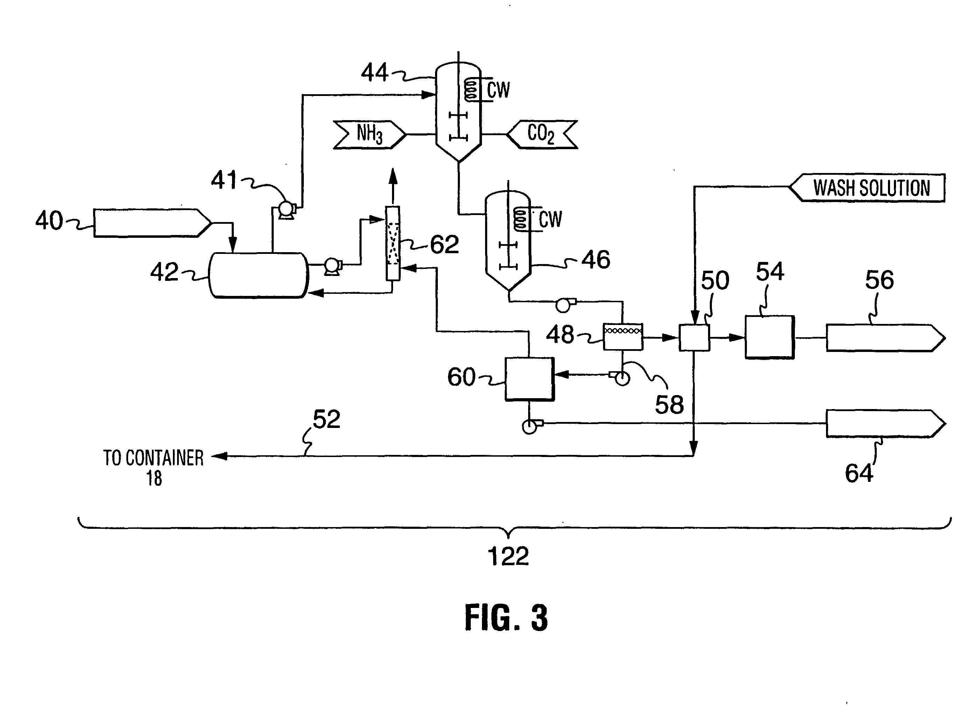

With reference to Figure 3, once the insolubles have been removed by the clarifier and filters, and the brine 40 is concentrated to its highest salt saturation level, the solution or brine 40 is presaturated in tank 42 with ammonia and carbon dioxide and then is passed, for example, pumped by pump 41, into at least a first main reactor 44 or multiple reactors where the formation of the sodium bicarbonate occurs. The temperature within the reactor 44 may vary depending on the reactor configuration. The final temperature of the solution will be progressively reduced to about $21°C$ with the brine feed temperature to the reactor 44 being maintained above $32°C$. The final temperature of the solution maximizes the bicarbonate yield and prevents contamination with $Na_2SO_4$. Pressure in reactor 44 will preferably be maintained at approximately 350 kPa(g) to approximately 1750 kPa(g). Although not essential, this ensures the ammonia remains dissolved in solution. A crystallizer 46 may be included downstream to effect crystallization of the sodium bicarbonate. Once the crystals have formed, they may be removed from the reactor 44 and/or crystallizer 46 through a filter means 48 which may comprise a pressure or non-pressure-type filter. Once the crystals are removed, they may be passed to a further filtration medium (not shown), an example of which may be a filtration screen or rotary centrifuge device (not shown), at which point the formed crystals may be washed with saturated sodium bicarbonate brine or methanol as indicated at 50 and dried with dryer 54 or calcined to form sodium carbonate. A high yield is achievable. The wash may be then returned via line 52 to the mixing container 14. The formed bicarbonate crystals, denoted by 56, may be then removed from the system for further uses.

The filtrate or brine 58 from the first reactor 44 is reheated to approximately $80°C$ to $95°C$ in a gas recovery boiler 60, where reactivated ammonia and carbon dioxide gases are released from the brine. The gases are routed to a gas recovery contactor 62 where they are subjected to the raw sodium sulfate feed brine and absorbed into solution to presaturate the feed 41 to the bicarbonate reactor 44. This process reduces the chemical consumption requirements.

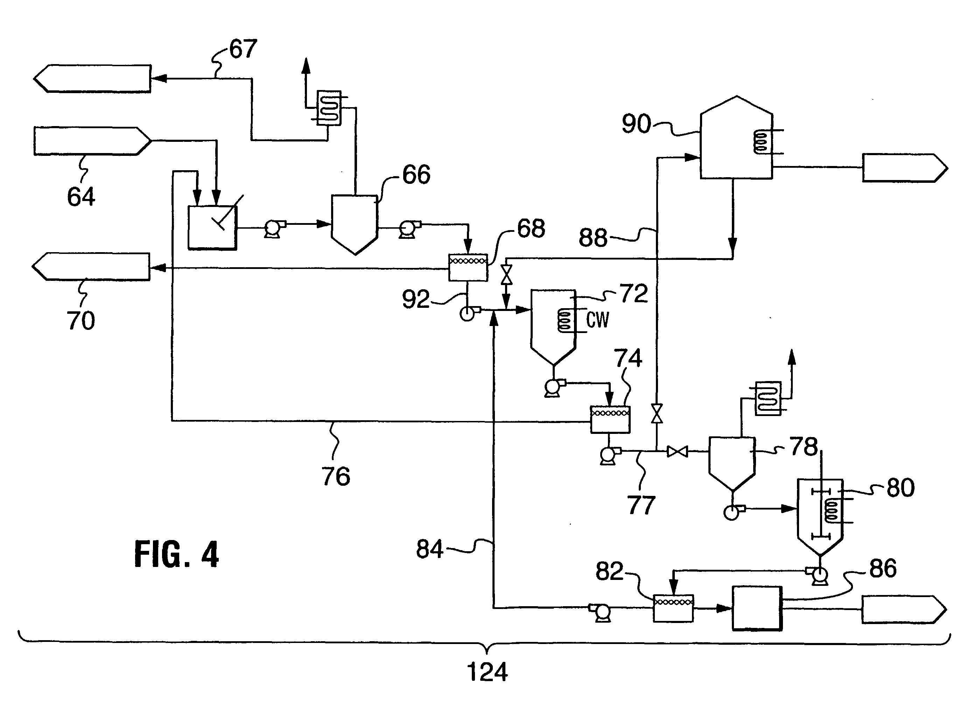

The filtrate solution, denoted by numeral 64, in Figure 4 is subjected to a first evaporation step at a temperature of, for example, greater than $59°C$ in evaporator 66 to condition the brine by reducing the level of unreacted and residual sodium ion in the solution. As the saturation level of the brine is obtained, sodium sulfate crystallizes from the solution before the saturation level of ammonia sulfate or double salt is achieved. The sodium sulfate crystals are filtered at filter 68 from the first evaporation brine and washed and dried as sodium sulfate product of high purity or recycled as indicated by 70 as feed stock.

The filtrate 70 from the first evaporation for brine conditioning is then cooled to approximately $20°C$ where crystallization of sodium sulfate and ammonium sulfate occurs in the form of a hydrated double salt ($Na_2SO_4 \cdot (NH4)$

2SO4·4H2O) or double salt/pure salt mix in crystallizer 72. The double salt crystals are filtered by filter 74 from the cooled brine and redissolved into the first evaporator feed brine 64 via line 76. At this point the brine 77 obtained after filtering off the double salt, contains significantly reduced levels of sodium to effect concentration and/or crystallization of substantially pure ammonium sulfate as a solid or liquid form. This product may be then removed from the system via line 88 as a liquid and stored in vessel 90 or transferred to a fertilizer evaporator 78 or crystallizer 80 to be transferred to the solid crystal form.

If a solid crystal form is desired, then the near saturated ammonia sulfate brine is exposed to a final evaporation step with step in crystallizer 80 to precipitate out the ammonium sulfate in a substantial crystal size and purity of greater than 73 wt%, allowing it to be immediately used as agricultural fertilizer. The crystals are filtered with filter 82. The saturated filtrate solution from the second evaporation step is recycled via line 84 to mix with the feed brine 77 to the double salt cooler/ crystallizer to further enhance the concentration process. The filtered crystals may then be dried with dryer 86.

Advantageously, a liquid fertilizer stored in vessel 90, which may be heated, affords the user the opportunity of blending the liquid product with other fertilizer components and further permits crystallization of the product as a mixed desired form. The liquid in vessel 90 may optionally be subjected to further evaporation and concentration to create a supersaturated fertilizer solution.

Although the process as discussed herein has been indicated to be primarily conducted in water, it will be understood by those skilled in the art that any suitable solvent can be used provided the choice of solvent does not vary the solubility relationship necessary to effect the process. As alternatives, glycol or glycol/water mixtures may be employed as the solvent.

With further reference to Figures 3 and 4, the overall process may include an additional washing step for washing the sodium bicarbonate and ammonium sulfate precipitates separately. In one possible configuration, the sodium bicarbonate which is formed in the reactor, may be passed into contact with a washing material, an example of which may be a source of methanol. The resulting filtrate may then be returned to a separation container. Similarly, the ammonium sulfate crystals, may be passed through a second independent source of methanol with the filtrate being returned to a separation container. The ammonium sulfate crystals and bicarbonate can be used for further uses.

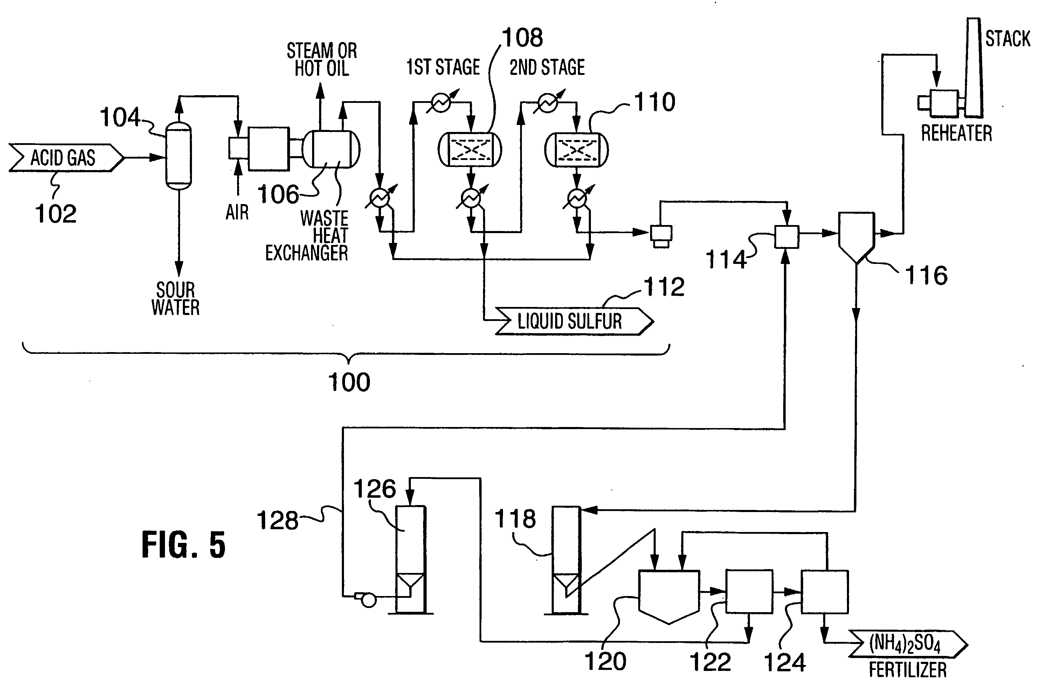

Figure 5 shows a variation on the process where the bicarbonate recovery systems as set forth herein previously can be combined to be useful in a sulfur recovery plant. Generally speaking, the area designated by numeral 100 in Figure 5 illustrates conventional apparatus employed for sulfur recovery from an acid gas stream by employing the modified Claus process, consisting of a single or multiple variation of thermal and catalytic recovery steps. Generally, the Claus process includes a feed of acid gas, globally denoted by numeral 102, which is passed into a container numeral 104, for removal of sour water. The stream is then passed into a reaction furnace and waste heat exchanger, denoted by numeral 106, where the thermal conversion occurs. The stream is then passed into a first catalytic stage conversion system, numeral 108, and subsequently into a further conversion, denoted by numeral 110 which may comprise "n" stages. Liquid sulfur is removed from the stages at 112. The stream is reheated and passed into a mixing unit 114 and then further into a collection device 116, which may comprise an electrostatic precipitator or baghouse. The solids from the collection device 116 are passed into a silo 118 and subsequently into a feed preparation on it specifically set forth as Figure 2 at tank 16. From the feed preparation tank 16, the feed is processed in accordance with the bicarbonate recovery system, globally denoted by numeral 122 and specifically set forth in the description for Figure 3. The produce may then be transferred into a fertilizer recovery unit 124, the details of which have been set forth in the description for Figure 4. The resulting product is commercial grade fertilizer. As an option, the sodium bicarbonate feed from the bicarbonate recovery unit 122 may be passed into a dry sorbent injection unit 126 and the bicarbonate then reintroduced into the system via line 128.

It is well known to those skilled in the art that the Claus process is useful for desulfurization. Generally speaking, the process is effected in two steps, namely:

$$H_2S + \tfrac{3}{2}O_2 \rightleftarrows H_2O + SO_2$$

$$2H_2S + SO_2 \rightleftarrows 2H_2O + \tfrac{3}{x}S_x$$

This generally results in an elemental sulfur recovery of approximately 90% to 96% in a liquid sulfur state. The remaining sulfur containing component is recovered in sulfur recovery techniques such as tail gas cleanup units. By employing the recovery process as set forth herein previously, sodium bicarbonate can be introduced into the oxidized tail gas stream containing residual sulfur compounds and results can therefore be the production of ammonium sulfate as indicated in Figure 5. By combining the modified Claus process with the processes as set forth herein, the result is the overall sulfur removal of the order of at least 95% or greater.

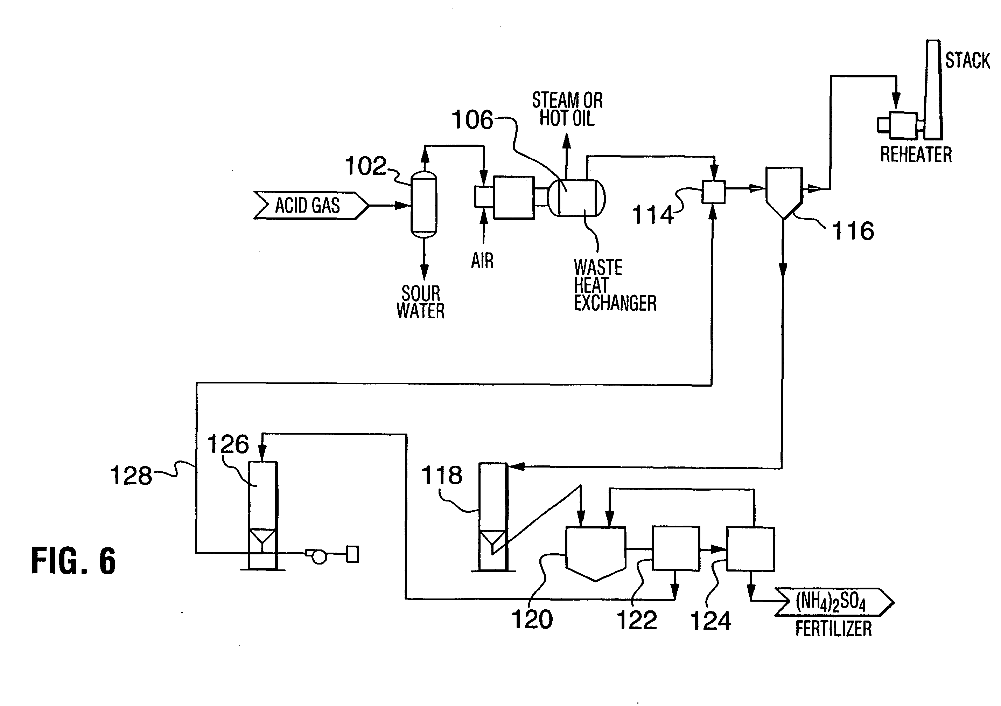

Turning to Figure 6, shown is a variation on the process in Figure 5, but for a lower volume production sulfur plant, typically having production levels of less than 10 tonnes per day (MTD) where economic constraints preclude the recovery of elemental sulfur as shown in Figure 5.

The acid gas stream may be as an alternative directly treated with liquid sodium bicarbonate or carbonate solution for desulfurization and form an alternate sulfur product.

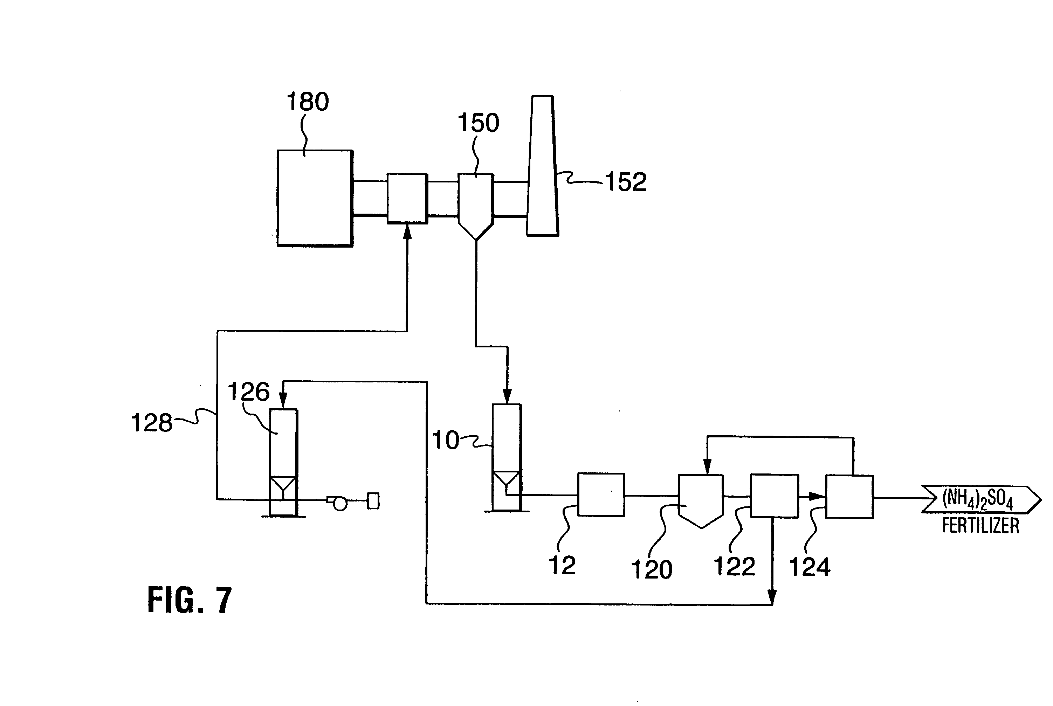

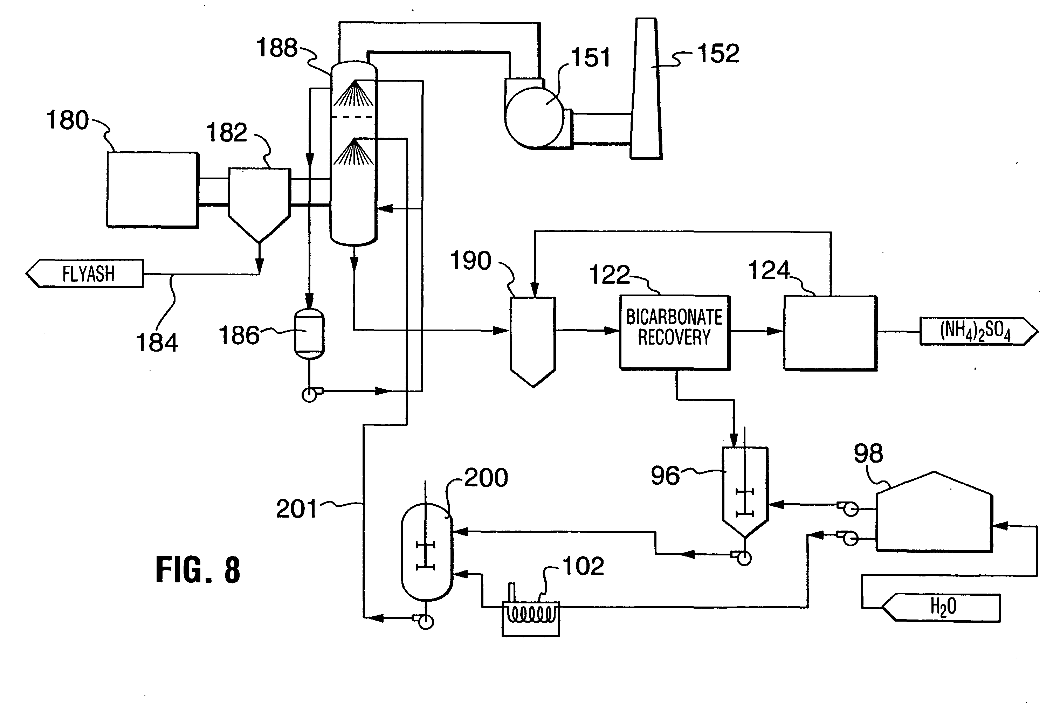

In Figures 7 and 8, shown are variations on the overall processes according to the present invention.

With more specific reference to Figure 7, there is illustrated an effective scheme whereby the recovery process as set forth herein, can be employed to regenerate dry sodium sulfate captured from a particulate collection device 150 such as an electrostatic precipitator or baghouse and produce sodium bicarbonate to be injected into the flue gas stream to primarily reduce sulfur components from sulfur sources such as an industrial boiler 180 and released by means of a stack 152. The practice of injecting a dry chemical into the hot flue gases is commonly referred to as DSI. By adapting the recovery process, discussed with respect to Figure 3, to the DSI technique, the overall scheme becomes a continuous regenerable process with no waste streams or landfill requirements, no appreciable losses, and all by-products are immediately commercially useable. Using dry sodium bicarbonate as the reagent offers the additional advantages of further recovery of other undesirable components such as $NO_x$, HCl and $SO_3$ from the flue gases, and improve the performance of the downstream collection device 150 (i.e. ESP or baghouse). The dry sorbent technique in addition, will not appreciably affect the temperature of the flue gases, thereby maintaining or improving the effluent emission dispersion from the stack 152.

The sodium sulfate containing flyash compound is transferred from the collection device 116 and stored in a silo 118 (Figure 6) and blended into the feed preparation tank 16 of the process denoted by 120 (Figure 6). The feed is processed in the bicarbonate recovery system 122 and the sodium bicarbonate is passed into a dry sorbent injection unit 126 and reintroduced into the system via line 128. By-product from the bicarbonate recovery unit 122 is transferred to the fertilizer recovery unit 124, the resulting product is commercial grade fertilizer.

Figure 8 illustrates a scheme by which the process can be modified to produce a specific sodium carbonate or bicarbonate mixed or pure solution which can be adapted for use in a wet scrubber. Flue gas from the industrial boiler or tail gas unit, globally denoted by numeral 180, is passed onto an electrostatic precipitator or baghouse 182 or other recovery device to remove flyash at 184. A water wash container 186 is provided to circulate wash water in a single or multi level upper section of a wet scrubber 188 and accumulated levels of precipitates and fluids are drawn off and passed to the lower section of the wet scrubber 188. Separate vessels may also be employed to effect the desired result. Once sodium sulfate at the desired concentration level is collected from the bottom of the wet scrubber 188 as a product of the scrubbing procedure, it is then further transferred to feed preparation tank 190 for thickening and clarification to a saturated state for feeding into reactor 20 (not shown) from the bicarbonate recovery unit, globally referenced as 122 and shown as Figure 3. From the reactor in the bicarbonate recovery unit 122, sodium bicarbonate is filtered from the solution and washed in either open screen, pressure type or combination of these (generally shown at 48 in Figure 3). The bicarbonate precipitate is washed and reduced to less than 10% liquid and then fed as a slurry into a bicarbonate slurry container 96 at approximately 700 kPa(g). At this point, the bicarbonate slurry in container 96 is mixed with clean water supplied to container 96 from a feed water supply container 98. The feed water is maintained at a temperature of approximately 48°C. The slurry is continually mixed and ranges in a concentration from about 20 wt% to about 40 wt%. The slurry is then transferred to a high pressure solution container 200 at a pressure of approximately 1050 kPa(g), where a saturated solution is formed. A saturated bicarbonate solution is created using additional feed water from container 98 which is heated to approximately 176°C by an injection water heater 102. The final saturated concentrated solution is then injected into wet scrubber 188 by means of line 201 for sulfur dioxide removal.

The temperature, pressure and concentration of reagent in the final injection solution can be varied to control the level of $SO_2$ removed, the desired pH of the system solutions and the final flue gas temperature exiting the wet scrubbing process. As a further example, the pressure of the injection system can be reduced to near atmospheric conditions prevalent in the wet scrubber 188. The temperature can then be reduced to near 49°C to eliminate water heater 102 and the high pressure reactor 200. This will result in a cooler final flue gas temperature resulting from the evaporative cooling effect which may or may not be detrimental to any specific application.

It will be appreciated that the wet scrubber 188 can take any form of contacting the reactant solution with the sulfur containing flue gas, for example, spray dryers, etc.

Further, the sodium carbonate or other suitable sodium compounds can be used as a replacement or combined in various ratios with sodium bicarbonate to effect or enhance the wet and dry scrubbing techniques. The conversion can easily be accomplished by calcining the bicarbonate in a dry form or by increasing the temperature in a liquid form to alter the bicarbonate to carbonate form. The carbon dioxide used in the process can be recovered in a recovery process as set forth herein.

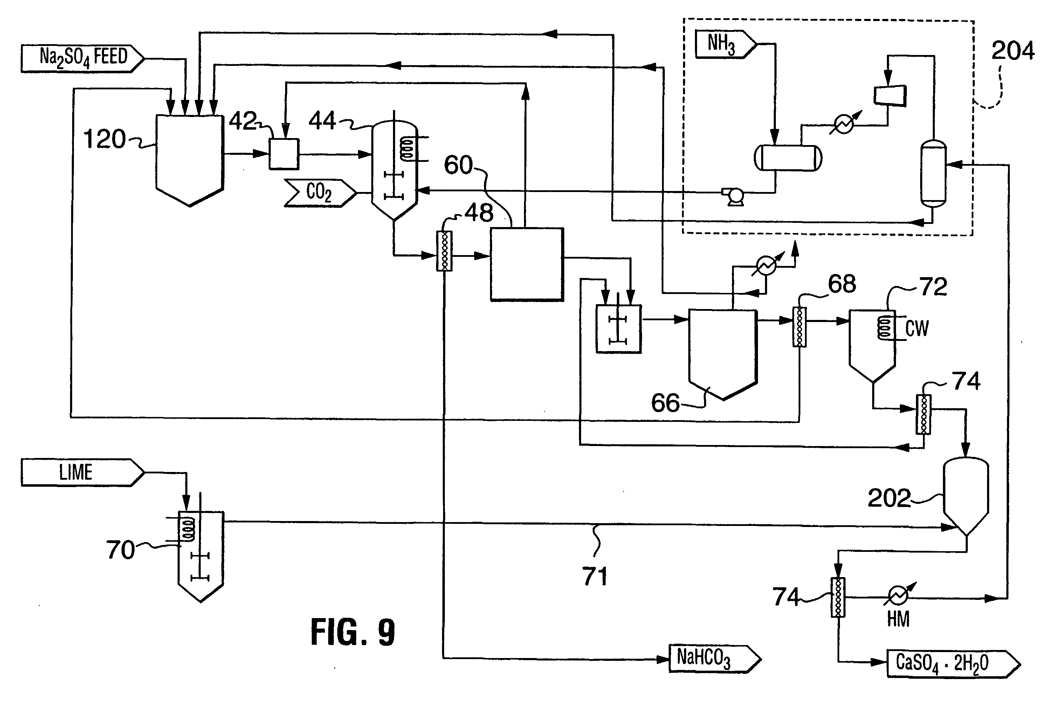

Turning to Figure 9, showing schematically is a further embodiment according to the present invention. The embodiment shown, a lime mixing container 70 is provided for retaining lime in any form, e.g. a slurry or powder form to be introduced into reactor 202 via line 71. By providing this addition to the recovery unit, commercial or landfill gypsum can be produced along with sodium bicarbonate as illustrated in the flow chart in Figure 9. As a further feature, the arrangement shown may include ammonia recovery unit 204 which will include the usual gaseous recovery means well known to those skilled in the art. This is useful since the ammonia is liberated subsequent to precipitation of gypsum and therefore can be easily recovered and recycled into the process for sodium bicarbonate production.

As a consequence of reactor, evaporator and crystallizer vessel size, temperature stratification may exist within the reactors and evaporators as set forth herein or the crystallizing vessels used to enhance the crystal growth, stability and yield. In order to avoid undesirable effects caused by hydrate or solvate precipitation in large vessels, the process can be performed in multiple vessels to circumvent these difficulties.

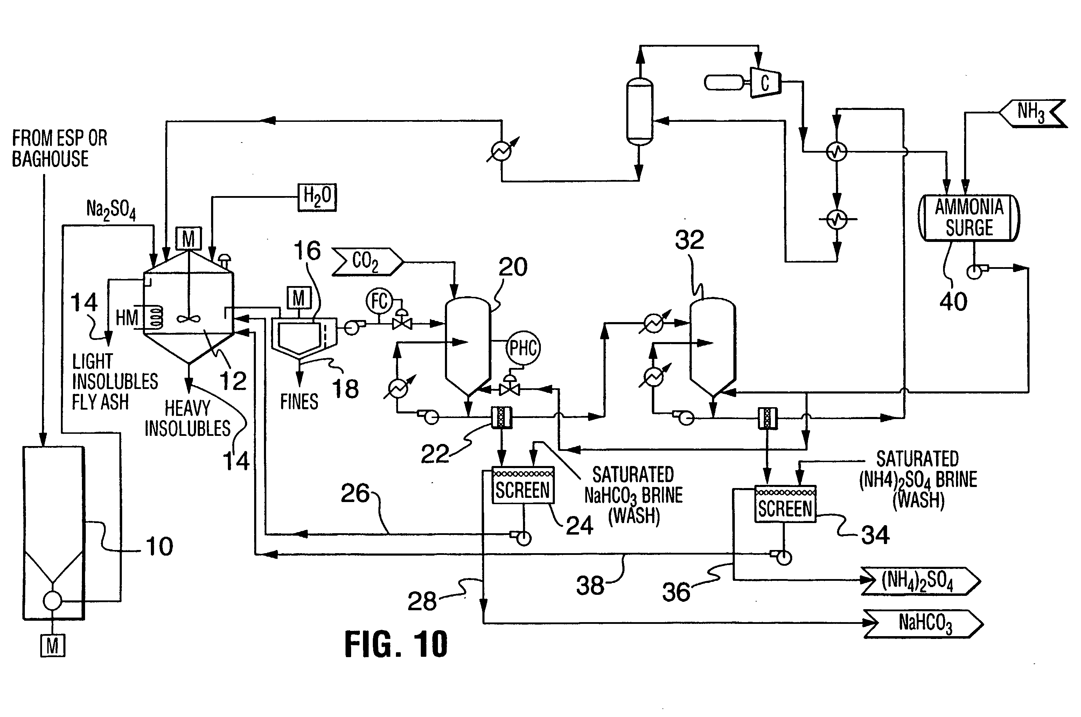

Referring now to Figure 10, shown is one possible process route according to the present invention. A source of sodium sulfate, such as flyash, for example, from commercial steam boilers containing various levels of sodium sulfate may be collected from hot flue gas streams and transferred into a collection silo, globally denoted by numeral 10 in the drawings. From the silo, the flyash may be transferred at a controlled rate into an atmospheric mixing container 12, which container is maintained at a temperature from between about 32°C and 42°C. The light and heavy insolubles are removed in a slurry form from the mixing container 12 at 14. The brine or filtrate is then transferred to a clarifier 16 and further filtered if necessary to polish the solution free of fine insolubles. Fine insolubles are removed from the clarifier at 18.

Once the insolubles have been removed by the clarifier 16, the solution or brine which contains a small percentage of ammonia is passed into a first main reactor 20 where the formation of the sodium bicarbonate occurs. The final temperature of the solution will be progressively reduced to about 21°C with the brine feed temperature to the reactor being maintained above 32°C. Pressure in reactor 20 will preferably be maintained at approximately 0 kPa to almost 1750 kPa to ensure the ammonia remains in solution to effect the reaction. A crystallizer may be included downstream to effect crystallization of the sodium bicarbonate. Once the crystals have formed, they may be processed as set forth with respect to Figure 3 via filtration screen 24. The wash may be then returned via line 26 to the mixing container 12. The formed bicarbonate crystals may be then removed from the system via line 28 for further uses.

The filtrate or brine from the first reactor is reheated back to approximately 32°C. The solution is maintained at a temperature of at least 32°C and then passed into reactor 32. Once in reactor 32, the brine solution is subjected with excess ammonium at a concentration of approximately 20 weight percent.

The pressure in the reactor is carefully controlled by varying the injection of ammonia (approximately 450 kPa) thereby controlling the desired concentration of excess ammonium. In reactor 32, the injection of the solution with ammonia shifts the equilibrium solubility of the solution of the reaction, denoted hereinabove, to favour the formation of ammonium sulfate precipitate. The temperature in the reactor is maintained at 32°C to keep free sodium cations soluble and to prevent contamination of the ammonium sulfate with undesirable solvates. When desired, the ammonia concentration can be altered by changing the pressure control. Similar to the description for reactor 20, reactor 32 may include a crystallizer downstream to effect the formation of ammonium sulfate crystals. Once formed, the crystals may be passed onto a pressure filter medium 34 and washed with suitable wash. The so-formed ammonium sulfate crystals can then be removed by line 36 for further uses. The wash may be returned to the mixing container 12 via line 38 for further uses. The ammonia containing filtrate remaining after the precipitation of the ammonium sulfate crystals, may be flashed off, compressed and condensed and collected in to a surge drum 40 as is known in the art. Once collected, the ammonia solution may be used for reinjection in the system.

The final recovered solution, containing soluble levels of ammonia can be recycled to the mixing container 12 to complete the continuous operation.

By practising the above method, a purity of ammonium sulfate greater than 50% by weight is achievable.

Advantageously, the ammonia can be substantially recovered for reuse which has positive economic advantages for the entire process.

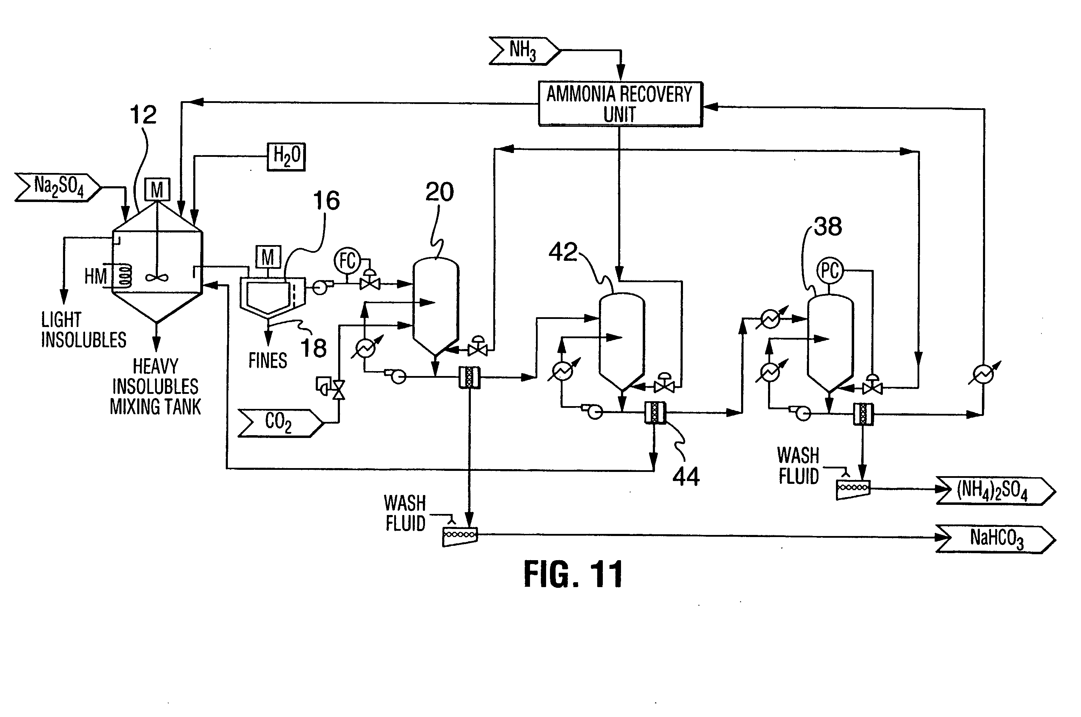

Figure 11 shows a further variation on the process according to Figure 10. In Figure 11, the brine conditioning step is employed between reactors 20 and 32. The brine conditioning step is effective to purify the feed stream for introduction into reactor 32 for eventual formation of ammonium sulfate by the further reduction of sodium ion concentration from the feed stream entering into reactor 32.

Once the sodium bicarbonate reaction has been completed, the bicarbonate precipitate is removed as set forth herein with respect to Figure 10 and the brine is transferred to intermediate reactor 42. In reactor 42, the concentration of the ammonia is increased to saturate the solution while the temperature of the reactor is lowered to approximately 7°C. This results in the formation of a precipitate comprising either pure sodium sulfate, or a mixed precipitate of sodium sulfate and ammonium sulfate. These precipitates are then filtered by filter 44 and the crystals eventually passed back into contact with mixing container 12. The filtrate is fed to reactor 32 and maintained under at least the same pressure conditions as indicated for Figure 10. Once in reactor 20, the filtrate undergoes the reaction as indicated hereinabove, the result is the formation of ammonium sulfate precipitate, however, the precipitate is formed in an environment where the sodium cation concentration is significantly reduced in view of the intermediate process using intermediate reactor 42. The result of the process is a solution concentration of a ammonium sulfate which will effect a precipitate of a concentration greater than 73% by weight.

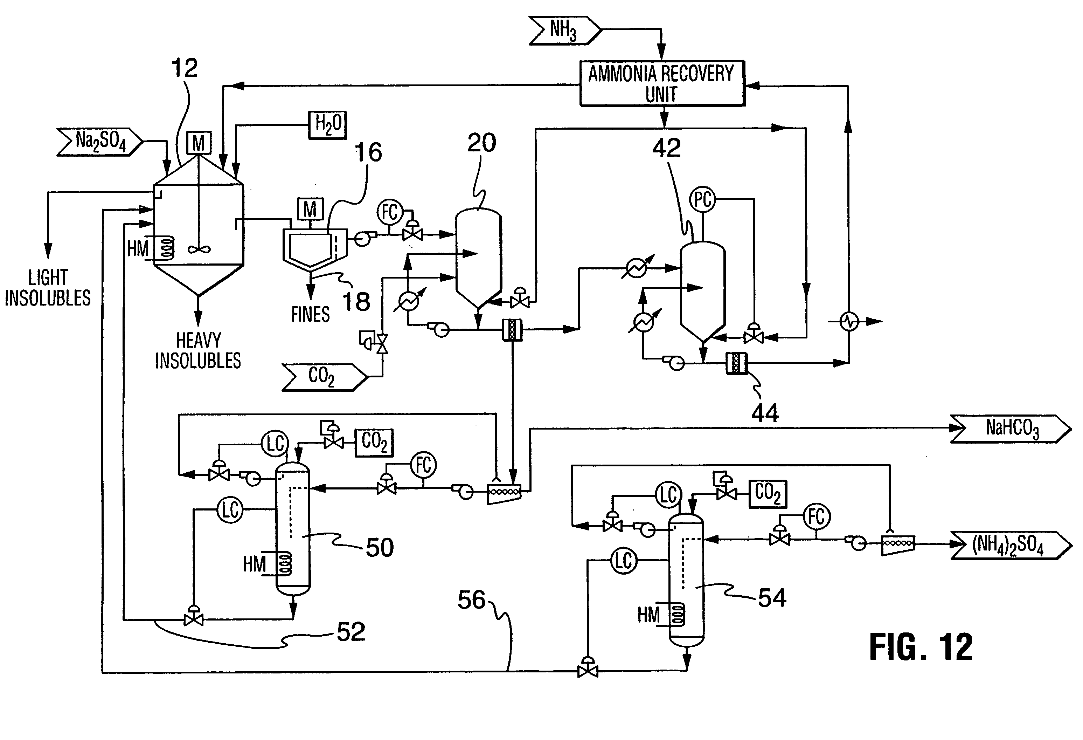

Referring now to Figure 12, shown is a further alternate arrangement by which the process may be practised. In Figure 12, the overall process may include a separate washing step for washing the sodium bicarbonate and ammonium sulfate precipitates separately. In one possible configuration, the sodium bicarbonate which is formed in reactor 20, may be passed into contact with a washing material, an example of which may be a source of methanol 50. The resulting filtrate may then be returned to mixing container 12 via line 52.

Similarly, the ammonium sulfate crystals formed in reactor 42, may be passed through a second independent source of methanol 54 with the filtrate being returned to mixing container by line 56. The ammonium sulfate crystals and bicarbonate can then be used for further uses.

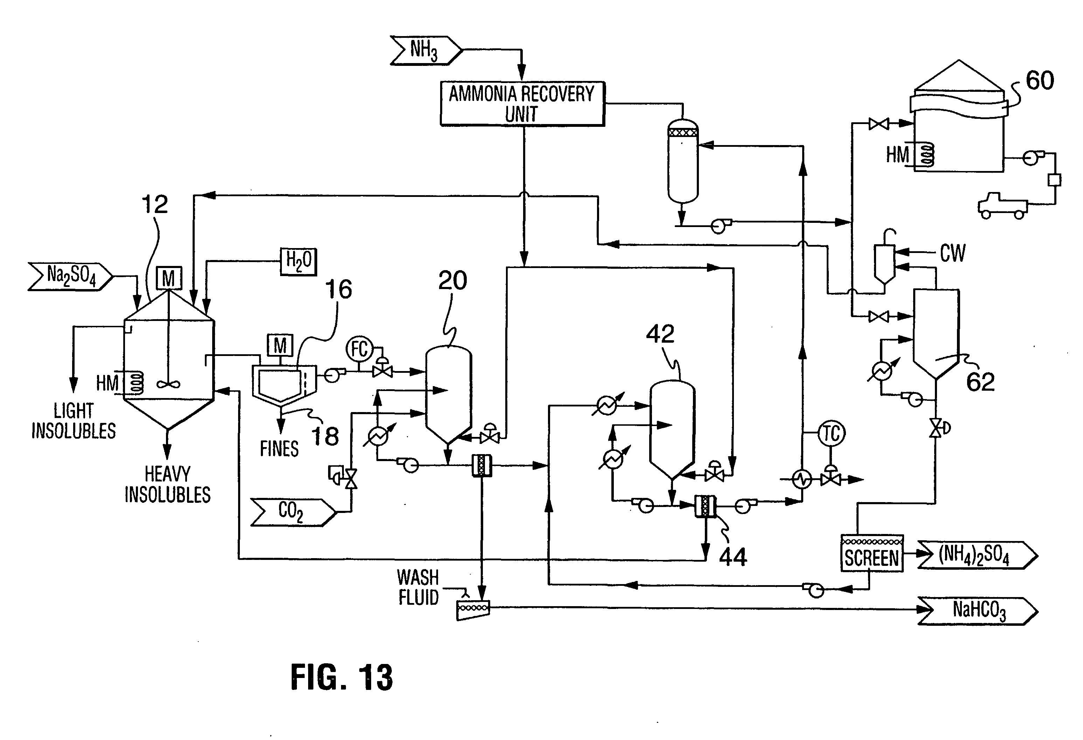

Referring now to Figure 13, shown is a further variation on the schematic process shown in Figure 10. In the process shown in Figure 13, the filtrate recovered from the sodium bicarbonate reaction can be made to be substantially pure liquid product, e.g. a fertilizer in the near saturated state. This facilitates blending the liquid product with other fertilizer components or permits crystallization of the product in the desired form. The liquid product may be passed from reactor 20 to the brine conditioning container 42 where the temperature of the solution is reduced to approximately $7°C$ as set forth herein previously with respect to Figure 11. In this embodiment, the ammonia concentration is increased from about 10% to about 50% or greater by weight to therefore provide a supersaturated solution. The result is the precipitation of contaminated sodium sulfate or mixed salts of ammonium and sodium sulfate. The filtrate in this situation is substantially saturated liquid ammonium sulfate which can then be passed on to a storage unit 60. As a further alternative, a user may simply pick up the liquid ammonium sulfate or alternatively, the ammonium sulfate may be pumped into a conventional evaporator (crystallizer) 62 to afford mixing the liquid with additional fertilizer components to have the final product crystallized.

The brine conditioning can be performed in a single step or it may be conditioned in multiple steps to achieve increased removal of sodium cations; this inherently leads to increased purity of the ammonium sulfate fertilizer. The above-mentioned steps can be any combination of known (salting out) steps i.e. evaporation, addition of excess ammonia, ion exchange, cooling among other techniques.

Typically, the evaporation is carried out at a temperature of greater than $59°C$ while other unit operations are carried out at a temperature less than $59°C$.

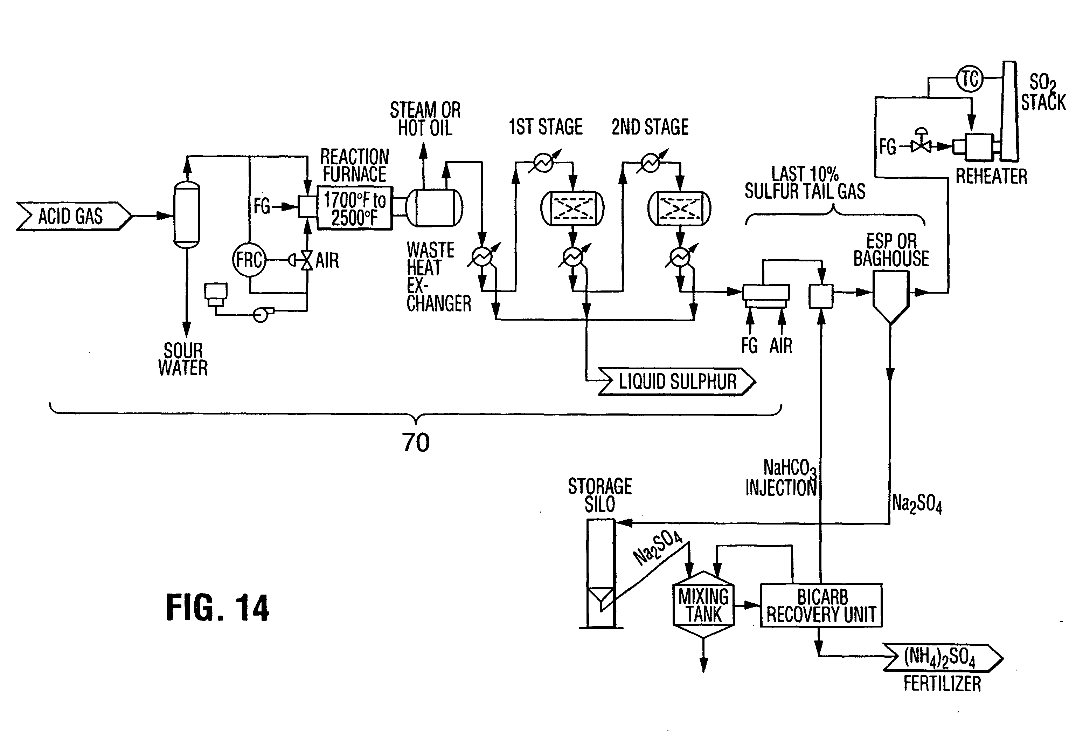

Figure 14 shows a variation on the process where the bicarbonate recovery systems can be combined to be useful in a sulfur recovery plant. The area designated by numeral 70 in Figure 14 illustrates conventional apparatus employed for sulfur recovery from an acid gas stream by employing the modified Claus process, consisting of a single or multiple variation of thermal and catalytic recovery steps.

By employing the recovery process as set forth herein previously, sodium bicarbonate can be introduced into the tail gas stream containing residual sulfur compounds and results can therefore be the production of ammonium sulfate as indicated in Figure 14. The overall modified Claus process, denoted by numeral 70 can be combined with the overall process for producing ammonium sulfate, the group of steps of which is generally indicated by numeral 115 in the figure. The broad steps as illustrated in the figure are generally common steps to those shown in Figures 10 and 11. By combining the modified Claus process with the processes as set forth herein, the result is sulfur removal of the order of at least 95% or greater.

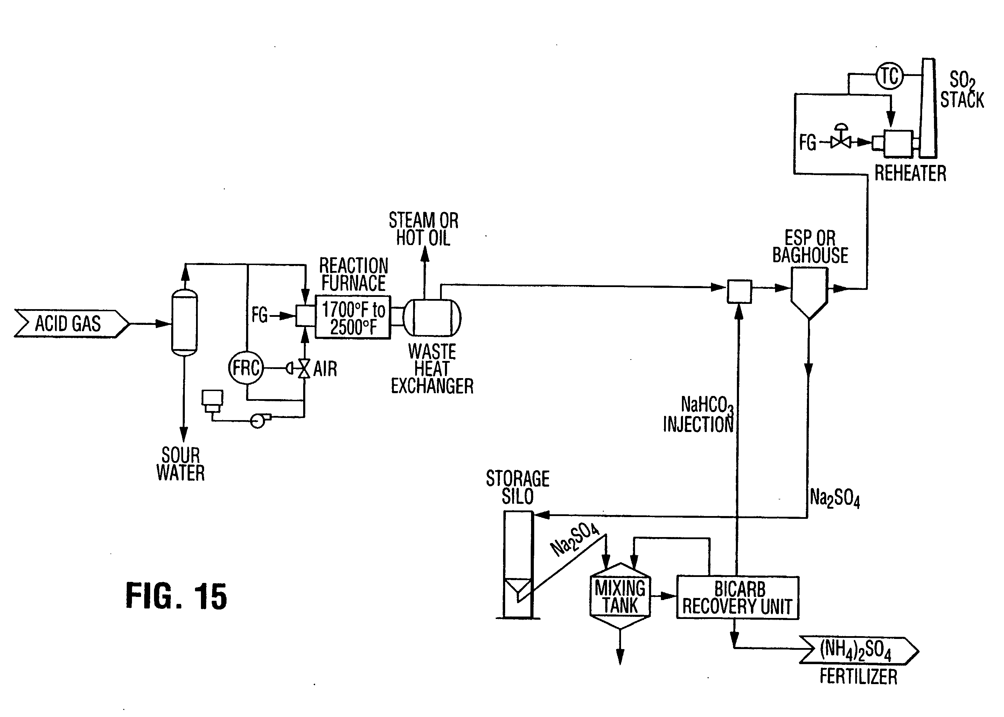

Figure 15 illustrates a further process variation for a lower volume 10 MTD production sulfur plant. The steps for the process are similar to those for Figure 14 and the treatment of the sulfur compound is generally denoted by the sequence of events as indicated by numeral 115.

The acid gas stream may be as an alternative directly treated with liquid sodium bicarbonate or carbonate solution for desulfurization and form an alternate sulfur product.

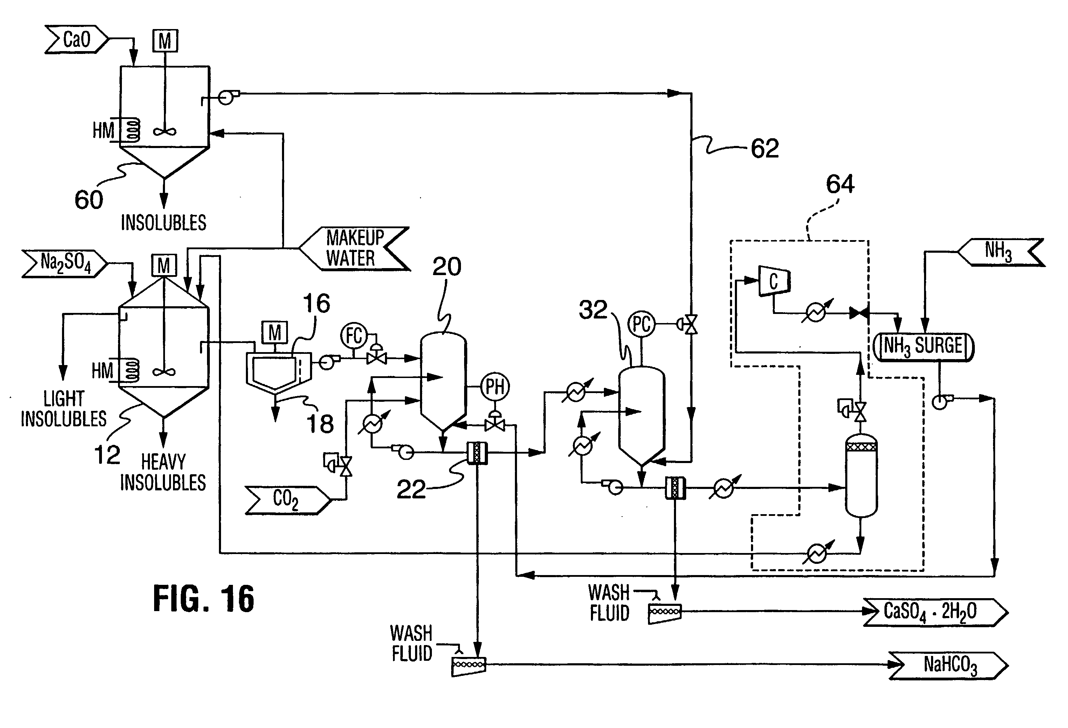

Turning to Figure 16, shown schematically is a further embodiment. A lime mixing container 70 is provided for retaining lime in any form, e.g. a slurry, powder, etc. to be introduced into reactor 32 via line 72. By providing this addition to the bicarbonate process, commercial or landfill gypsum can be produced along with sodium bicarbonate as illustrated in Figure 16. The arrangement shown may include ammonia recovery unit 74 which will include the usual gaseous recovery means well known to those skilled in the art. This is useful since the ammonia is liberated subsequent to precipitation of gypsum and therefor can be easily recovered.

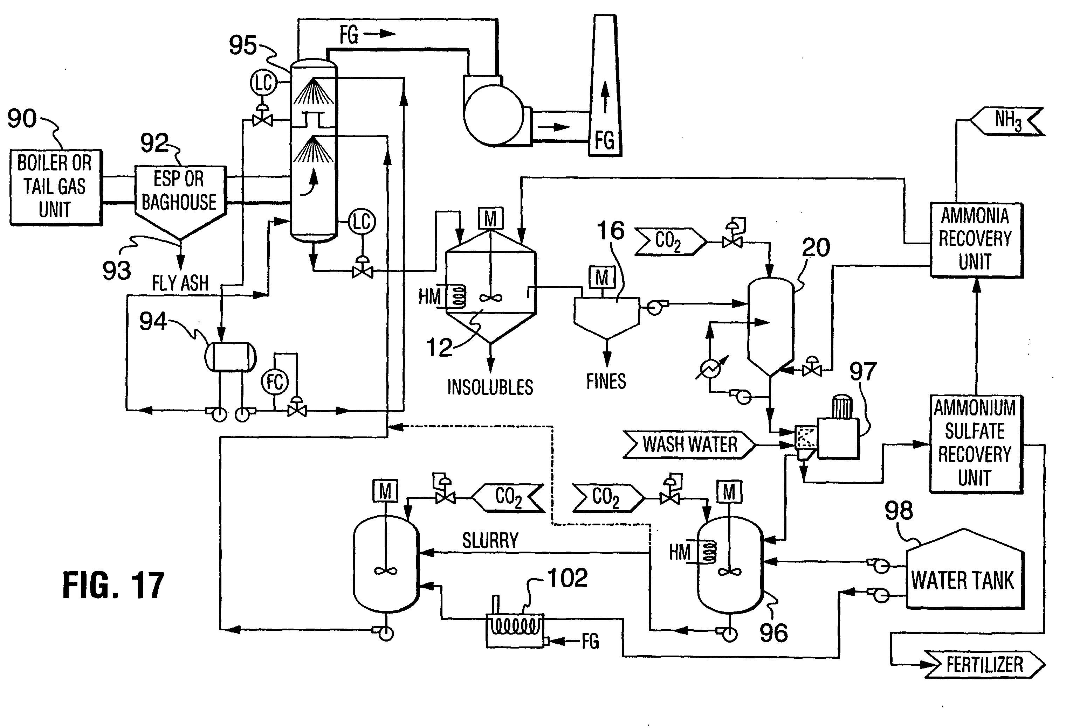

Turning to Figure 17, shown is a further variation on the overall processes. In Figure 17, a FGD process using a wet scrubbing system for desulfurization, employs sodium carbonate or bicarbonate as the active reagent.

In the embodiment illustrated, flue gas from the industrial boiler or tail gas unit, globally denoted by numeral 90, is passed onto an electrostatic precipitator or baghouse 92 or other recovery device to remove flyash at 93. A water wash container 94 is provided to circulate wash water in the upper section of the scrubber and accumulated levels of precipitates and fluids are drawn off from container 94 and passed to the lower section of the scrubber 95. Once sodium sulfate is collected from the bottom of scrubber 95 as a product of the scrubbing procedure, it is then further transferred to mixing container 12 for thickening and clarification to a saturated state for feeding into reactor 20. From reactor 20, sodium bicarbonate is filtered from the solution and washed in either open screen, pressure type, vacuum type, centrifuge or cyclone type filters or any combination of these (generally shown at 97). The bicarbonate precipitate is washed and reduced to less than 10% liquid and then fed as a slurry into a bicarbonate slurry container 96 at approximately 700 kPa. At this point, the bicarbonate slurry in container 96 is mixed with clean water supplied to container 96 from a feed water supply container 98. The feed water is maintained at a temperature of approximately 48°C. The slurry is continually mixed and ranges in a concentration of between about 20% by weight to about 40% by weight. The slurry is then transferred to a high pressure solution container 100 at a pressure of approximately 1050 kPa, where a saturated solution is formed. A saturated bicarbonate solution is created using additional boiler feed water from container 98 which is heated to approximately 176°C by an injection water heater 102. The final saturated concentrated solution is then injected into wet scrubber 95 for sulfur dioxide removal.

The temperature, pressure and concentration of reagent in the final injection solution can be varied to control the level of $SO_2$ removed and the final flue gas temperature exiting the wet scrubbing process. As a further example, the temperature and pressure can be reduced to near atmospheric conditions prevalent in the scrubber. The temperature can be reduced to 45°C to eliminate water heater 102 and the high pressure reactor 100. This will result in a cooler final flue gas temperature resulting from the evaporative cooling effect which may or may not be detrimental to any specific application.

In addition, it will be appreciated that the wet scrubber 104 can take any form of contracting the reactant solution with the sulfur containing flue gas, for example spray driers, etc.

As an alternative to reducing sodium ion content, the excess ammonia treatment may be replaced by an ion exchange unit operation. In this operation, sodium ions can be replaced with ammonium ions to preclude the formation of undesirable sodium compounds inter alia.

As is known in the art, the design of ion exchange depends on three broad parameters, namely, resin type, resin capacity and selectivity. As an option, by employing the ion exchange in an operation, the resin may be initially loaded through the use of a regenerative solution, for example, ammonium carbonate with ammonium ions. When a fluid stream of ammonium and sodium sulfate encounters the resin, which is loaded with ammonium, there will be a proclivity to exchange sodium. This proclivity will also advantageously ensure that the fluid always encounters fresh resin only loaded with ammonium.

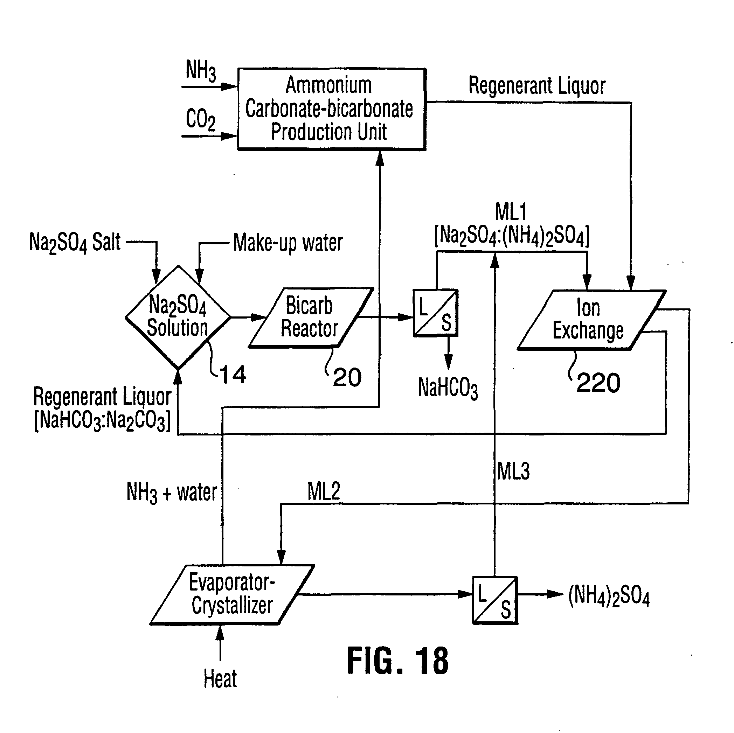

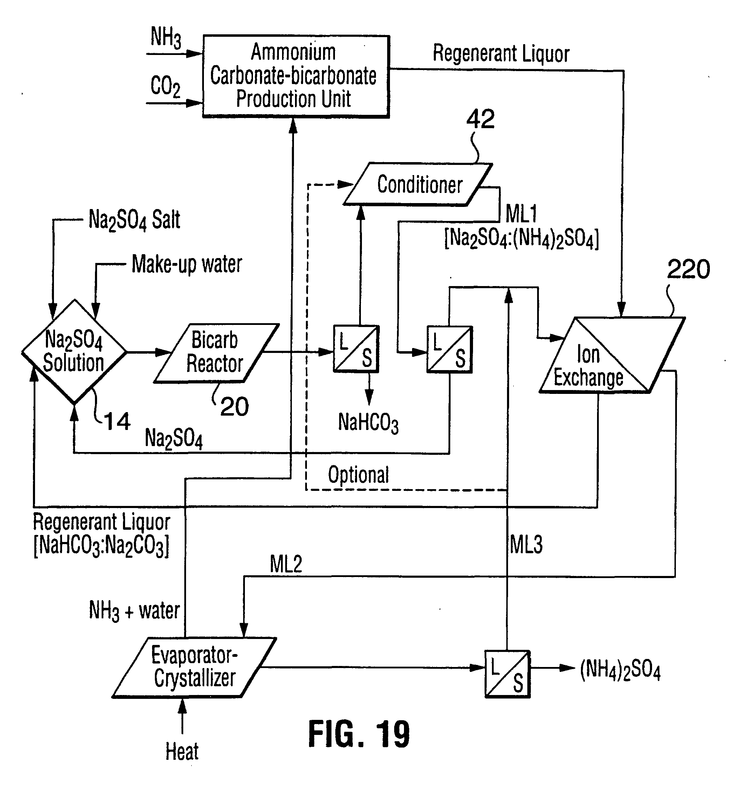

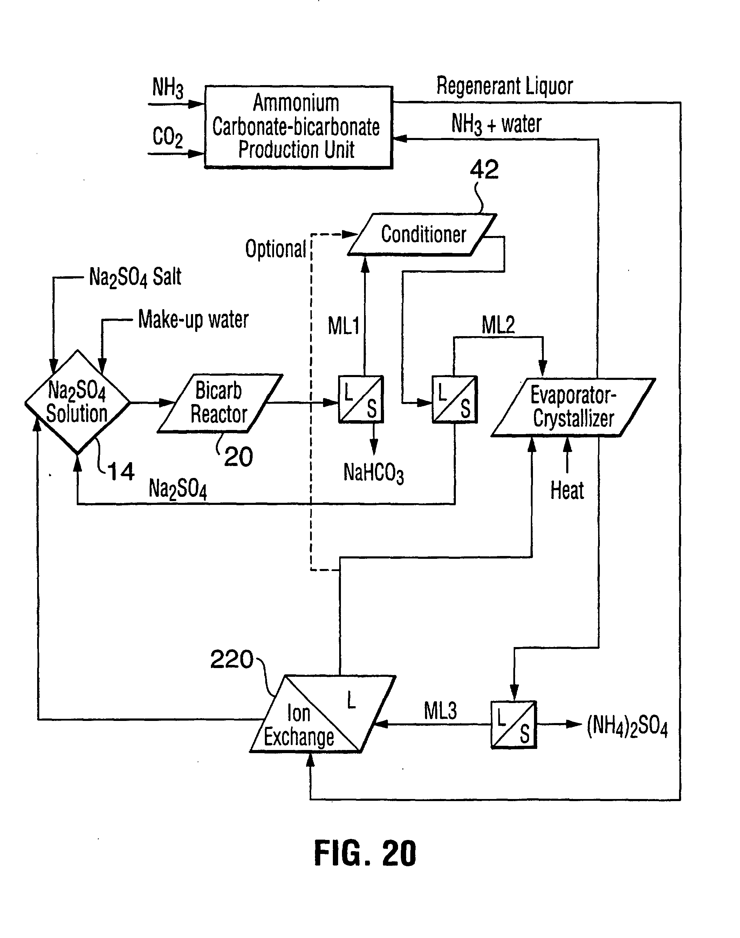

The ion exchange scheme can be used in any number of locations in the process as set forth herein previously to enrich the stream with ammonia ions in exchange for sodium. An example of the process using an ion exchange scheme for treatment of brine from the reactor is shown in Figure 18. The ion exchange scheme preferably uses several columns in different operating modes, examples of which include exchange, regeneration and standby. The example shown in Figure 18 employs a reactor unit 220 in the production of resin regenerating solution using ammonia containing condensed water from the fertilizer evaporator-crystallizer unit as one of the feed components. The exit liquor from the resin regeneration may be recycled in the system. Figures 19 and 20 show additional examples of the location for the ion exchange unit together with optional conditioning steps using the conditioner 42 as set forth herein previously.

It will be appreciated by those skilled that Figures 18 through 20 are only exemplary of those positions where the ion exchange system 220 could be employed.

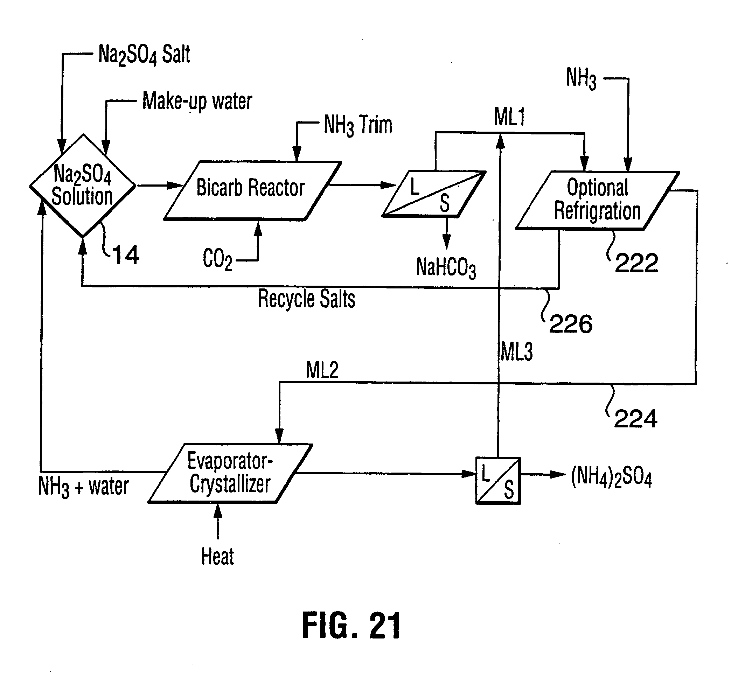

Figure 21 illustrates an overall schematic view of a further option employing cooling to effect the desirable results according to the present invention. Refrigeration may be used as a further alternative to the techniques of evaporation, ammonia shifting or ion exchange to reduce sodium ion content to thereby result in a stream having a higher concentration of ammonium sulfate. One possible scheme is to cool the feedstream by the cross exchange with a much colder stream. As an example, the feed may be cooled within a range of 0°C to -40°C. A desirable temperature is -11°C. Due to the subfreezing ranges required for the cooling, a standard closed loop refrigeration system may be used to cool the liquid in exchange with the feed. Propane and ammonia refrigerants, glycols and any other acceptable refrigerant that remains functional in the given temperature range can be employed in the system.

Figure 21 illustrates one possible arrangement where the refrigeration unit operation is broadly denoted by numeral 222. At cold temperatures, the solubility of the components present in the system is substantially reduced. Salts that can not be held by the solution precipitate. The primary precipitate will be hydrated sodium sulfate and lesser quantities of ammonium and sodium bicarbonate. The exiting liquid phase 224, exiting from the refrigeration unit 222, will contain less sodium ions than the liquid phase entering into the refrigeration unit operation as a result of the precipitation of sodium compounds. Some ammonium sulfate may precipitate should the concentration in the feed solution be high and the temperature low enough. Although this is the case, proportionally more ammonium compounds remain in the liquid phase than the sodium compounds. The result is a liquid phase having much less sodium ion content to be used for the production of ammonium sulfate. This is a distinct advantage by incorporating the refrigeration operation 222 based on the phase relationship of the compounds in the system. The precipitated solids may be separated from the liquid phase of the cold stream by means of any suitable solid separation device (not shown). The solids can be recirculated through the system as indicated by numeral 226.

It has been found that the refrigeration scheme can be further augmented by adding excess ammonium in the conditioning step with a concentration range varying up to 20% by weight and typically 10% by weight depending on the residual level of sodium desired in the fertilizer evaporator feed brine.

**Claims**

1.  A method of selectively precipitating sodium bicarbonate and ammonium sulfate from a source containing sodium sulfate, wherein:

    (a) a solution of sodium sulfate is provided; and
    (b) the sodium sulfate solution is contacted with carbon dioxide and ammonia or ammonium ions while maintaining a solution temperature of at least 32°C to form a precipitate of sodium bicarbonate, **characterized in that** the method comprises:
    (c) recovering as a product said sodium bicarbonate precipitate produced in step (b);
    (d) treating the remaining solution of step (c) by addition of sufficient ammonia or ammonium ions to form a saturated solution of ammonium sulfate and a precipitate of sodium sulfate from said solution;
    (e) recovering as a product said sodium sulfate precipitate; and subsequently
    (f) recovering ammonium sulfate as a product from the remaining solution of step (e).

2.  The method as defined in claim 1, **characterized in that** the method further includes the step of washing said sodium bicarbonate product and said ammonium sulfate product with methanol.

3.  The method as defined in claim 1, **characterized in that** in step (d) said solution of step (c) is treated with ammonia gas.

4.  The method as defined in claim 1, **characterized in that** the method further includes the step of recovering unreacted ammonia gas.

5.  The method as defined in claim 1, **characterized in that** said treating step (d) includes forming a saturated solution of ammonium sulfate by contacting said solution with an excess of ammonia gas.

6.  The method as defined in claim 3, **characterized in that** said ammonia gas comprises about 20% dissolved gas.

7.  The method as defined in claim 1, **characterized in that** said solution in step (d) is cooled to a temperature of 7°C to form a precipitate of sodium sulfate and a mixed precipitate of sodium sulfate and ammonium sulfate.

8.  The method as defined in claim 1, **characterized in that** the method further includes the step of contacting said solution in step (f) with sufficient ammonia to precipitate ammonium sulfate having a purity of greater than 73% by weight.

9.  The method as defined in claim 1, **characterized in that** the method further includes the step of recycling sodium sulfate recovered from step (e) to form the solution of step (a).

10. The method as defined in claim 1, **characterized in that** the method further includes the step of supersaturating said solution in step (d) with ammonia at a concentration of at least 20 weight percent and cooling said solution to about 7°C to form a solution of ammonium sulfate.

11. A method according to claim 1, wherein the source containing sodium sulfate is a sulfur-containing gas stream, **characterized in that** the method comprises:

    (a) exposing said sulfur-containing gas stream to oxidizing conditions to ensure that sulfur values are present as oxidized sulfur values; and
    (b) contacting said sulfur values with sodium carbonate or sodium bicarbonate to form sodium sulfate.

12. The method as defined in claim 11, **characterized in that** at least about 90% of sulfur present in said gas stream is removed by steps (a) and (b).

13. A continuous process for producing sodium bicarbonate, sodium carbonate and ammonium sulfate, including reacting, within a reactor, sodium sulfate in aqueous solution with ammonia and carbon dioxide to precipitate sodium bicarbonate and form a first mother liquor, **characterized in that** the process comprises:

(a) evaporating, in a first evaporation step, the first mother liquor from the precipitation of the bicarbonate to precipitate unreacted sodium sulfate, forming a second mother liquor substantially lower in sodium ion concentration than said first mother liquor;

(b) cooling the second mother liquor from the precipitation of the unreacted sodium sulfate to precipitate a double salt of sodium sulfate/ammonium sulfate to further reduce the sodium ion concentration, forming a third mother liquor;

(c) evaporating, in a second evaporation step, the third mother liquor from the precipitation of the double salt to precipitate ammonium sulfate in a purity of greater than approximately 75 wt %, forming a fourth mother liquor;

(d) recirculating the double salt to the first mother liquor from the precipitation of sodium bicarbonate prior to the first evaporation step; and

(e) recirculating the fourth mother liquor to the second mother liquor from the first evaporation step to precipitate unreacted sodium sulfate.

**14.** A process according to claim 13, **characterized in that** the process further comprises recycling to the reactor carbon dioxide and ammonia from the precipitation of the sodium bicarbonate prior to evaporation.

**15.** A process according to claim 13, **characterized in that** the content of the reactor is maintained at a temperature in the range of from about 20°C to about 60°C,

**16.** A process according to claim 15, **characterized in that** the content of the reactor is maintained at a temperature of about 40°C.

**17.** A process according to claim 13, **characterized in that** the reactor operates under a pressure of from 0 kPa to about 1,750 kPa.

**18.** A process according to claim 17, **characterized in that** the reactor operates at a pressure of about 700 kPa.

**19.** A process according to claim 13, **characterized in that** at least a part of carbon dioxide and ammonia is fed into the reactor in the liquefied form.

**20.** A process according to claim 13, **characterized in that** at least a part of carbon dioxide and ammonia is fed into the reactor in the gaseous form.


**Patentansprüche**

**1.** Verfahren zum selektiven Ausfällen von Natriumbicarbonat und Ammoniumsulfat aus einer Natriumsulfat enthaltenden Quelle, worin

(a) eine Lösung aus Natriumsulfat bereitgestellt wird; und

(b) die Natriumsulfatlösung mit Kohlendioxid und Ammoniak oder Ammoniumionen in Berührung gebracht wird, während eine Lösungstemperatur von wenigstens 32°C aufrechterhalten wird, um einen Niederschlag von Natriumbicarbonat auszubilden, **dadurch gekennzeichnet, dass** das Verfahren umfasst:

(c) Rückgewinnen des in Schritt (b) erzeugten Natriumbicarbonatniederschlags als Produkt;

(d) Behandeln der verbleibenden Lösung aus Schritt (c) durch Zugeben von genügend Ammoniak oder Ammoniumionen zur Ausbildung einer gesättigten Lösung aus Ammoniumsulfat und eines Niederschlags aus Natriumsulfat aus der Lösung;

(e) Rückgewinnen des Natriumsulfatniederschlags als Produkt und nachfolgend

(f) Rückgewinnen von Ammoniumsulfat aus der verbleibenden Lösung des Schritts (e) als Produkt.

**2.** Verfahren nach Anspruch 1, **dadurch gekennzeichnet, dass** das Verfahren weiterhin das Waschen des Natriumbicarbonatprodukts und des Ammoniumsulfatprodukts mit Methanol einschließt.

**3.** Verfahren nach Anspruch 1, **dadurch gekennzeichnet, dass** in Schritt (d) die Lösung aus Schritt (c) mit Ammoniakgas behandelt wird.

**4.** Verfahren nach Anspruch 1, **dadurch gekennzeichnet, dass** das Verfahren weiterhin den Schritt der Rückgewinnung von nicht umgesetztem Ammoniakgas einschließt.

**5.** Verfahren nach Anspruch 1, **dadurch gekennzeichnet, dass** der Behandlungsschritt (d) die Ausbildung einer gesättigten Ammoniumsulfatlösung durch in Berührung bringen der Lösung mit einem Überschuß von Ammoniakgas einschließt.

**6.** Verfahren nach Anspruch 3, **dadurch gekennzeichnet, dass** das Ammoniakgas etwa 20% gelöstes Gas enthält.

**7.** Verfahren nach Anspruch 1, **dadurch gekennzeichnet, dass** die Lösung in Schritt (d) auf eine Temperatur von 7°C abgekühlt wird zur Ausbildung eines Natriusulfatniederschlags und eines gemischten Niederschlags aus Natriumsulfat und Ammoniumsulfat.

**8.** Verfahren nach Anspruch 1, **dadurch gekennzeichnet, dass** das Verfahren weiterhin den Schritt einschließt, bei welchem die Lösung in Schritt (f) mit ausreichend Ammoniak in Berührung gebracht wird, um Ammoniumsulfat mit einer Reinheit von größer als 73 Gew.-% auszufällen.

**9.** Verfahren nach Anspruch 1, **dadurch gekennzeichnet, dass** das Verfahren weiterhin den Schritt der Rückführung des aus Schritt (e) zurückgewonnenen Natriumsulfats zur Ausbildung der Lösung in Schritt (a) einschließt.

**10.** Verfahren nach Anspruch 1, **dadurch gekennzeichnet, dass** das Verfahren weiterhin den Schritt einschließt, bei welchem die Lösung in Schritt (b) übersättigt wird mit Ammoniak bei einer Konzentration von wenigstens 20 Gew.-% und Abkühlen der Lösung auf etwa 7°C zur Ausbildung einer Ammoniumsulfatlösung.

**11.** Verfahren nach Anspruch 1, **dadurch gekennzeichnet**, worin die Natriumsulfat enthaltende Quelle ein Schwefel enthaltender Gasstrom ist, **dadurch gekennzeichnet, dass** das Verfahren umfasst:

(a) Aussetzen des Schwefel enthaltenden Gasstroms bei oxidierenden Bedingungen, um zu sichern, dass die Schwefelwerte als oxidierte Schwefelwerte vorliegen; und
(b) in Berührung bringen der Schwefelwerte mit Natriumcarbonat oder Natriumbicarbonat zur Ausbildung von Natriumsulfat.

**12.** Verfahren nach Anspruch 11, **dadurch gekennzeichnet, dass** wenigstens etwa 90% des in diesem Gasstrom vorhandenen Schwefels durch die Schritte (a) und (b) entfernt werden.

**13.** Kontinuierliches Verfahren zur Herstellung von Natriumbicarbonat, Natriumcarbonat und Ammoniumsulfat, bei welchem in einem Reaktor Natriumsulfat in wässriger Lösung mit Ammoniak und Kohlendioxid umgesetzt wird, um Natriumbicarbonat auzufällen und eine erste Mutterlauge zu bilden, **dadurch gekennzeichnet, dass** das Verfahren umfasst:

(a) Verdampfen der ersten Mutterlauge in einem ersten Verdampfungsschritt aus dem Bicarbonatniederschlag, um nicht umgesetztes Natriumsulfat auszufällen, und Ausbilden einer zweiten Mutterlauge mit einer weitgehend niedrigeren Natriumionenkonzentration als in der ersten Mutterlauge;
(b) Abkühlen der zweiten Mutterlauge aus dem Niederschlag des nicht umgesetzten Natriumsulfats, um ein Doppelsalz aus Natriumsulfat/Ammoniumsulfat auszufällen, um die Natriumionenkonzentration weiterhin zu vermindern, und Ausbilden einer dritten Mutterlauge;
(c) Verdampfen der dritten Mutterlauge in einem zweiten Verdampfungsschritt aus dem Niederschlag des Doppelsalzes, um Ammoniumsulfat mit einer Reinheit von größer als etwa 75 Gew.-% auszufällen, und Ausbilden einer vierten Mutterlauge;
(d) Rezirkulieren des Doppelsalzes zu der ersten Mutterlauge aus dem Natriumbicarbonatniederschlag vor dem ersten Verdampfungsschritt; und
(e) Rezirkulieren der ersten Mutterlauge zu der zweiten Mutterlauge aus dem ersten Verdampfungsschritt, um das nicht umgesetzte Natriumsulfat auszufällen.

**14.** Verfahren nach Anspruch 13, **dadurch gekennzeichnet, dass** das Verfahren weiterhin die Rückführung von Kohlendioxid. und Ammoniak aus dem Natriumbicarbonatniederschlag vor dem Verdampfen zum Reaktor umfasst.

**15.** Verfahren nach Anspruch 13, **dadurch gekennzeichnet, dass** der Reaktorinhalt bei einer Temperatur im Bereich von etwa 20°C bis etwa 60°C gehalten wird.

**16.** Verfahren nach Anspruch 15, **dadurch gekennzeichnet, dass** der Reaktorinhalt bei einer Temperatur von etwa 40°C gehalten wird.

**17.** Verfahren nach Anspruch 13, **dadurch gekennzeichnet, dass** der Reaktor unter einem Druck von 0 kPa bis etwa 1.750 kPa betrieben wird.

**18.** Verfahren nach Anspruch 17, **dadurch gekennzeichnet, daß** der Reaktor bei einem Druck von etwa 700 kPa betrieben wird.

**19.** Verfahren nach Anspruch 13, **dadurch gekennzeichnet, dass** wenigstens ein Teil von Kohlendioxid und Ammoniak dem Reaktor in verflüssigter Form zugegeben wird.

**20.** Verfahren nach Anspruch 13, **dadurch gekennzeichnet, dass** wenigstens ein Teil von Kohlendioxid und Ammoniak dem Reaktor in gasförmiger Form zugegeben wird.

## Revendications

**1.** La présente invention concerne une méthode de précipitation sélective du bicarbonate de sodium et du sulfate d'ammonium à partir d'une source contenant du sulfate de sodium, dans laquelle :

(a) une solution de sulfate de sodium est fournie ; et
(b) la solution de sulfate de sodium est mise en contact avec du dioxyde de carbone et de l'ammoniac ou des ions ammonium tout en maintenant une température d'au moins 32°C afin de former un précipité de bicarbonate de sodium, **caractérisée par le fait que** la méthode comprend les étapes consistant à :
(c) récupérer un produit dudit précipité de bicarbonate de sodium produit à l'étape (b) ;
(d) traiter la solution restante de l'étape (c) en ajoutant suffisamment d'ammoniac ou d'ions ammonium pour former une solution saturée de sulfate d'ammonium et un précipité de sulfate de sodium issu de ladite solution ;
(e) récupérer en tant que produit ledit précipité de sulfate de sodium ; et ensuite
(f) récupérer du sulfate d'ammonium en tant que produit à partir de la solution restante de l'étape (e).

**2.** Méthode selon la revendication 1, **caractérisée par le fait que** cette méthode comprend également l'étape de lavage dudit produit bicarbonate de sodium et dudit produit sulfate d'ammonium avec du méthanol.

**3.** Méthode selon la revendication 1, **caractérisée par le fait qu'**à l'étape (d), la solution mentionnée à l'étape (c) est traitée avec du gaz ammoniac.

**4.** Méthode selon la revendication 1, **caractérisée par le fait que** la méthode comprend également l'étape de récupération du gaz ammoniac qui n'a pas réagi.

**5.** Méthode selon la revendication 1, **caractérisée par le fait que** l'étape de traitement (d) mentionnée comprend la formation d'une solution saturée de sulfate d'ammonium en mettant la solution mentionnée en contact avec un excès de gaz ammoniac.

**6.** Méthode selon la revendication 3, **caractérisée par le fait que** ledit gaz ammoniac comprend environ 20% de gaz dissous.

**7.** Méthode selon la revendication 1, **caractérisée par le fait que** la solution mentionnée à l'étape (d) est refroidie à une température de 7°C pour former un précipité de sulfate de sodium et un précipité mixte de sulfate de sodium et de sulfate d'ammonium.

**8.** Méthode selon la revendication 1, **caractérisée par le fait que** la méthode comprend également l'étape de mise en contact de la solution mentionnée à l'étape (f) avec suffisamment d'ammoniac pour précipiter du sulfate d'ammonium ayant une pureté supérieure à 73% en poids.

**9.** Méthode selon la revendication 1, **caractérisée par le fait que** la méthode comprend également l'étape de recyclage du sulfate de sodium obtenu à l'étape (e) pour former la solution de l'étape (a).

**10.** Méthode selon la revendication 1, **caractérisée par le fait que** la méthode comprend également l'étape de sursaturation de la solution mentionnée à l'étape (d) avec de l'ammoniac à une concentration d'au moins 20 pour cent en poids et de refroidissement de la solution mentionnée à environ 7°C afin de former une solution de sulfate d'ammonium.

**11.** Méthode selon la revendication 1, dans laquelle la source contenant du sulfate de sodium est un jet gazeux contenant du soufre, **caractérisée par le fait que** la méthode comprend :

(a) exposition du jet gazeux contenant du soufre mentionné à des conditions oxydantes afin d'assurer que les valeurs en soufre sont présentes en tant que valeurs en soufre oxydé ; et
(b) mise en contact des valeurs en soufre mentionnées avec du carbonate de sodium ou du bicarbonate de sodium pour former du sulfate de sodium.

**12.** Méthode selon la revendication 11, **caractérisée par le fait qu'**au moins environ 90% du soufre présent dans le jet gazeux mentionné est éliminé par les étapes (a) et (b).

**13.** Procédé continu pour la production de bicarbonate de sodium, de carbonate de sodium et de sulfate d'ammonium, incluant le fait de faire réagir, dans un réacteur, du sulfate de sodium en solution aqueuse avec de l'ammoniac et du dioxyde de carbone afin de précipiter le bicarbonate de sodium et former la première eau mère, **caractérisé par le fait que** le procédé comprend les étapes consistant à :

(a) évaporer, dans une première étape d'évaporation, la première eau mère provenant de la précipitation du bicarbonate pour précipiter le sulfate de sodium qui n'a pas réagi, formant la deuxième eau mère dont la concentration en ions sodium est plus faible que celle de la première eau mère mentionnée ;
(b) refroidir la deuxième eau mère provenant de la précipitation du sulfate de sodium n'ayant pas réagi afin de précipiter un sel double de sulfate de sodium/sulfate d'ammonium de façon à réduire encore la concentration en ions sodium, formant une troisième eau mère ;
(c) évaporer dans une deuxième étape d'évaporation, la troisième eau mère provenant de la précipitation du sel double afin de précipiter du sulfate d'ammonium d'une pureté supérieure à environ 75% en poids, formant une quatrième eau mère ;
(d) faire recirculer du sel double vers la première eau mère de la précipitation du bicarbonate de sodium avant la première étape d'évaporation ; et
(e) faire recirculer la quatrième eau mère vers la deuxième eau mère provenant de la première étape d'évaporation afin de précipiter le sulfate de sodium qui n'a pas réagi.

**14.** Procédé selon la revendication 13, **caractérisé par le fait que** le procédé comprend en plus le recyclage vers le réacteur du dioxyde de carbone et de l'ammoniac provenant de la précipitation du bicarbonate de sodium avant l'évaporation.

**15.** Procédé selon la revendication 13, **caractérisé par le fait que** le contenu du réacteur est maintenu à une température comprise dans une gamme d'environ 20°C à environ 60°C.

**16.** Procédé selon la revendication 15, **caractérisé par le fait que** le contenu du réacteur est maintenu à une température d'environ 40°C.

**17.** Procédé selon la revendication 13, **caractérisé par le fait que** le réacteur opère à une pression de 0 kPa jusqu'à environ 1.750 kPa.

**18.** Procédé selon la revendication 17, **caractérisé par le fait que** le réacteur opère à une pression de d'environ 700 kPa.

**19.** Procédé selon la revendication 13, **caractérisé par le fait qu'**au moins une partie du dioxyde de carbone et de l'ammoniac est chargée dans le réacteur sous forme liquéfiée.

**20.** Procédé selon la revendication 13, **caractérisé par le fait qu'**au moins une partie du dioxyde de carbone et de l'ammoniac est chargée dans le réacteur sous forme gazeuse.

SALT SOLUBILITY CHART IN WATER

FIG. 1

—o— NaHCO₃    —□— (NH₄)₂SO₄    —o— Na₂SO₄

EP 0 833 799 B1

**FIG. 2**

Na$_2$SO$_4$ · 10 H$_2$O

67 — RECYCLE WATER

10

12

RECYCLE WATER

70

16    14

17

20

22

19

18

24

40

DEWATERED Na$_2$SO$_4$

52

WASHWATER RECYCLE

120

EP 0 833 799 B1

**FIG. 3**

EP 0 833 799 B1

FIG. 4

FIG. 5

EP 0 833 799 B1

FIG. 6

STACK

REHEATER

STEAM OR
HOT OIL

106

102

ACID GAS

114

116

AIR

WASTE
HEAT
EXCHANGER

SOUR
WATER

128

126

118

120    122    124    $(NH_4)_2SO_4$
FERTILIZER

EP 0 833 799 B1

FIG. 7

EP 0 833 799 B1

FIG. 8

EP 0 833 799 B1

FIG. 9

FIG. 10

FROM ESP OR BAGHOUSE

$Na_2SO_4$

$H_2O$

$CO_2$

$NH_3$

AMMONIA SURGE

LIGHT INSOLUBLES FLY ASH

HEAVY INSOLUBLES

FINES

SATURATED $NaHCO_3$ BRINE (WASH)

SATURATED $(NH4)_2SO_4$ BRINE (WASH)

SCREEN

SCREEN

$(NH_4)_2SO_4$

$NaHCO_3$

EP 0 833 799 B1

**FIG. 11**

EP 0 833 799 B1

FIG. 12

EP 0 833 799 B1

FIG. 13

EP 0 833 799 B1

FIG. 14

FIG. 15

EP 0 833 799 B1

FIG. 16

EP 0 833 799 B1

**FIG. 17**

EP 0 833 799 B1

EP 0 833 799 B1

FIG. 18

34

EP 0 833 799 B1

FIG. 19

**FIG. 20**

FIG. 21